(19) Europäisches Patentamt
European Patent Office
Office européen des brevets

(11) Veröffentlichungsnummer: **0 179 019**
**B1**

(12) **EUROPÄISCHE PATENTSCHRIFT**

(45) Veröffentlichungstag der Patentschrift: **16.05.90**

(21) Anmeldenummer: **85810463.1**

(22) Anmeldetag: **09.10.85**

(51) Int.Cl.$^5$: **C 09 B 62/443**, C 09 B 62/04, C 09 B 62/02, D 06 P 1/38

# (54) Reaktivfarbstoffe, deren Herstellung und Verwendung.

(30) Priorität: **15.10.84 CH 4931/84**

(43) Veröffentlichungstag der Anmeldung:
**23.04.86 Patentblatt 86/17**

(45) Bekanntmachung des Hinweises auf die Patenterteilung:
**16.05.90 Patentblatt 90/20**

(84) Benannte Vertragsstaaten:
**BE CH DE FR GB IT LI**

(56) Entgegenhaltungen:
DE-A-1 619 543
FR-A-2 084 024
FR-A-2 084 040
FR-A-2 197 946
FR-E- 83 421

CHEMICAL ABSTRACTS, Band 89, 1978, Seite 160, Nr. 112371r, Columbus, Ohio, US; & JP - A - 78 46 329

(73) Patentinhaber: **CIBA-GEIGY AG**
**Klybeckstrasse 141**
**CH-4002 Basel (CH)**

(72) Erfinder: **Scheibli, Peter, Dr.**
**Nussbaumweg 3**
**CH-4103 Bottmingen (CH)**
Erfinder: **Seitz, Karl, Dr.**
**Schützenweg 9**
**CH-4104 Oberwil (CH)**
Erfinder: **Seiler, Herbert, Dr.**
**Leimgrubenweg 60**
**CH-4125 Riehen (CH)**
Erfinder: **Tzikas, Athanassios, Dr.**
**Muttenzerstrasse 78**
**CH-4133 Pratteln (CH)**

(56) Entgegenhaltungen:
CHEMICAL ABSTRACTS, Band 89, 1978, Seite 160, Nr. 112372s, Columbus, Ohio, US; & JP - A - 78 46 328

CHEMICAL ABSTRACTS, Band 84, 1976, Seite 83, Nr. 123403a, Columbus, Ohio, US; & JP - A - 75 157 422

**EP 0 179 019 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtshaftlichkeit des Färbeprozesses geführt. Reaktivfarbstoffe sind bereits in grosser Zahl z.B. aus den französischen Patentanmeldungsschriften 83 421, 2 084 024, 2 084 040 und 2 197 946, der deutschen Offenlegungsschrift Nr. 1 619 543 sowie aus Chemical Abstracts *84* (1976) Nr. 123 402 a, *89* (1978) Nr. 112 371 r und 89 (1978) Nr. 112 372 s bekannt; die dort offenbarten Farbstoffe verfügen über einen Reaktivrest der Formel

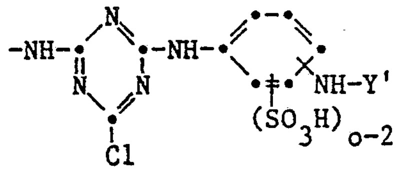

,

worin Y' z.B. einen Halotriazin-, Halopyrimidin-, Halochinoxalin-, Sulfatoäthylsulfonyl-, Acryloyl-, Haloacryloyl-, Halopropionyl-, Methyl- oder Phenylsulfonylpropionyl-, Phenoxypropionyl-, Halocrotonoyl- oder Phenoxycarbonylrest bedeutet.

Es besteht jedoch weiterhin ein Bedarf nach neuen Reaktivfarbstoffen, welche verbesserte Eigenschaften, insbesondere in Bezug auf die Applikation, aufweisen.

Für das Färben von Baumwolle nach dem Kaltverweilverfahren werden heute Reaktivfarbstoffe gefordert, die eine ausreichende, der niedrigen Färbetemperatur angepasste Substantivität haben, und die zugleich eine gute Auswaschbarkeit der nicht fixierten Anteile aufweisen. Sie sollen ferner eine hohe Reaktivität besitzen, so dass nur kurze Verweilzeiten erforderlich sind, und sie sollen insbesondere Färbungen mit hohen Fixiergraden liefern. Von bekannten Farbstoffen werden diese Anforderungen nur in ungenügendem Masse erfüllt.

Der vorliegenden Erfindung lag daher die Aufgabe zugrunde, neue, verbesserte Reaktivfarbstoffe für das Kaltverweilverfahren zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten neuen faserreaktiven Farbstoffen die gestellte Aufgabe gelöst wird.

Gegenstand der Erfindung sind Reaktivfarbstoffe der Formel

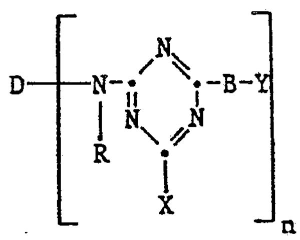

(1) ,

worin

D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthron-, Nitroaryl-, Naphthochinon-, Pyrenchinon- oder Perylentetracarbimid-Reihe, R Wasserstoff oder gegebenenfalls durch Halogen, Hydroxy, Cyano, Carboxy, Sulfo oder $C_1$—$C_4$-Alkoxy substituiertes $C_1$—$C_4$-Alkyl, X Halogen, niedrigmolekulares Alkylsulfonyl, eine Sulfonsäure- oder Phosphonsäuregruppe oder Phenylsulfonylrest,

B ein Rest der Formel

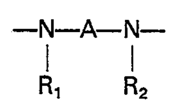

(1c),

$R_1$ und $R_2$ unabhängig voneinander Wasserstoff, gegebenenfalls durch Halogen, Hydroxy, Cyano, Carboxy, Sulfo oder $C_1$—$C_4$-Alkoxy substituiertes $C_1$—$C_4$-Alkyl oder gegebenenfalls durch Halogen, Carboxyl, Sulfo, $C_1$—$C_4$-Alkyl oder $C_1$—$C_4$-Alkoxy substituiertes Phenyl,

A ein gegebenenfalls durch Halogen, $C_1$—$C_4$-Alkyl, $C_1$—$C_4$-Alkoxy, Carboxy und/oder Sulfo substituierter $C_2$—$C_6$-Alkylen-, Phenylen-, oder Naphthylenrest oder der Rest eines Diphenyls oder Stilbens,

Y der 4-Vinylsulfonylbutyryl- oder 4-(β-Chloräthylsulfonyl)-butyrylrest und n = 1 oder 2 ist.

Der Rest D in Formel (1) kann an seinem Grundgerüst die bei organischen Farbstoffen üblichen Substituenten gebunden enthalten.

Als Beispiele für weitere Substituenten im Rest D seien genannt Alkylgruppe mit 1 bis 4 Kohlenstoffatomen, wie Methyl, Aethyl, Propyl, Isopropyl oder Butyl, Alkoxygruppen mit 1 bis 4 Kohlenstoffatomen, wie Methoxy, Aethoxy, Propoxy, Isopropoxy oder Butoxy, Acrylaminogruppen mit 1 bis 8 Kohlenstoffatomen, wie Acetylamino, Propionylamino oder Benzoylamino, Amino, Alkylamino mit 1 bis 4 Kohlenstoffatomen, wie Methylamino, Aethylamino, Propylamino, Isopropylamino oder Butylamino, Phenylamino, N,N-Di-β-hydroxyäthylamino, N,N-Di-β-sulfatoäthylamino, Sulfobenzylamino, N,N-Disulfobenzylamino, Alkoxycarbonyl mit 1 bis 4 Kohlenstoffatomen im Alkoxyrest, wie Methoxycarbonyl oder Aethoxycarbonyl, Alkylsulfonyl mit 1 bis 4 Kohlenstoffatomen, wie Methylsulfonyl oder Aethylsulfonyl, Trifluormethyl, Nitro, Cyano, Halogen, wie Fluor, Chlor oder Brom, Carbamoyl, N-Alkylcarbamoyl mit 1 bis 4 Kohlenstoffatomen im Alkylrest, wie N-Methylcarbamoyl oder N-Aethylcarbamoyl, Sulfamoyl, N-Alkylsulfamoyl mit 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, N-(β-Hydroxyäthyl)-sulfamoyl, N,N-Di-(β-hydroxyäthyl)-sulfamoyl, N-Phenylsulfamoyl, Ureido, Hydroxy, Carboxy, sulfomethyl oder Sulfo. Vorzugsweise enthält der Rest D eine oder mehrere Sulfonsäuregruppen. Reaktivfarbstoffe der Formel (1), worin D der Rest eines Azofarbstoffes ist, enthalten als Substituenten vor allem Methyl, Aethyl, Methoxy, Aethoxy, Actylamino, Benzoylamino, Amino, Chlor, Brom, Ureido, Hydroxy, Carboxy, Sulfomethyl oder Sulfo.

Der Rest R ist, falls es sich um einen $C_1$—$C_4$ Alkylrest handelt, geradkettig oder verzweigt; er kann weitersubstituiert sein durch Halogen, Hydroxy, Cyan, $C_{1-4}$-Alkoxy, Carboxy oder Sulfo. Als Beispiele für R seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl und β-Sulfatoäthyl. Vorzugsweise ist R Wasserstoff, Methyl oder Aethyl.

Der als Anion aspaltbare X ist ein Halogenatom, wie Fluor, Chlor oder Brom, eine niedrigmolekulare Alkyl-sulfonylgruppe, wie Methylsulfonyl oder Aethylsulfonyl, der Phenylsulfonylrest oder eine Sulfonsäure- oder Phosphonsäuregruppe. Vorzugsweise ist X Fluor oder Chlor.

Als Reste $R_1$ und $R_2$ kommen z.B. die gleichen unsubstituierten oder substituierten Alkylreste in Betracht, die oben für R genannt sind. Sofern $R_1$ oder $R_2$ Phenyl ist, kann dieses weitersubstituiert sein, durch Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo.

Das aliphatische oder aromatische Brückenglied A ist z.B. ein Alkylenrest mit 2 bis 6 Kohlenstoffatomen z.B. Aethylen, Propylen, Butylen, Hexylen oder Cyclohexylen, ein Naphthylenrest, der Rest eines Diphenyls oder Stilbens oder insbesondere ein Phenylenrest. Der Rest A kann weitere Substituenten enthalten und zwar Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen oder Phenylen. Bevorzugt ist der Aethylenrest und der Phenylenrest.

Der in eckige Klammern eingeschlossene Teil von Formel (1) ist ein Reaktivrst, welcher ein- oder zweimal im Molekül vorhanden sein kann; beide Formalvarianten sind gleich wichtig. Falls n = 2 ist, können die beiden Reaktivreste gleich oder verschieden sein; vorzugsweise sind beide Reste gleich. Der Reaktivrest enthält zwei Substituenten, X und Y, die faserreaktive Abgangsgruppen sind oder die nach Art von faserreaktiven Abgangsgruppen wirksam werden können. Unter faserreaktiven Verbindungen sind solche zu verstehen, die mit den Hydroxygruppen der Cellulose, den Amino-, Carboxy, Hydroxy- und Thiolgruppen bei Wolle und Seide, oder mit den Amino- und eventuell Carboxygruppen von synthetischen Polyamiden unter Bildung kovalenter chemischer Bindung zu reagieren vermögen.

Bevorzugte Ausführungsformen der Reaktivfarbstoffe der Formel (1) sind:

a) Reaktivfarbstoffe der Formel (1), worin X Fluor oder Chlor ist.

b) Reaktivfarbstoffe gemäss a), worin B ein Rest der Formel (1c), und A Sulfophenylen ist.

Die unter a) und b) jeweils nicht genannten Symbole der Formel (1) haben die bei der Erläuterung der Formel (1) angegebenen Bedeutungen. In Betracht zu ziehen sind insbesondere auch Kombinationen von Merkmalen gemäss a) bis b). Bevorzugt sind weiterhin:

c) Reaktivfarbstoffe der Formel (1) oder gemäss a) bis b), worin D der Rest eines Mono- oder Disazofarbstoffes ist.

d) Reaktivfarbstoffe der Formel (1) oder gemäss a) bis b), worin D der Rest eines Metallkomplexazo- oder Formazanfarbstoffes ist.

e) Reaktivfarbstoffe der Formel (1) oder gemäss a) bis b), worin D der Rest eines Anthrachinonfarbstoffes ist.

f) Reaktivfarbstoffe gemäss d), worin D der Rest eines 1:1-Kuperkomplexazofarbstoffes der Benzol- oder Naphthalinreihe ist, und das Kupferatom an je eine metallisierbare Gruppe beidseitig in ortho-Stellung zur Azobrücke gebunden ist.

Bevorzugt sind insbesondere:

g) Reaktivfarbstoffe gemäss c), der Formel

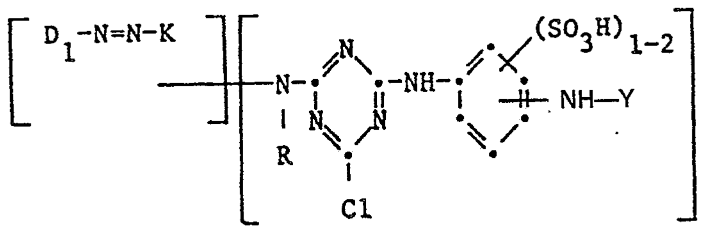

(2) ,

worin $D_1$ der Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, Y die unter der Formel (1) angegebene Bedeutung hat, und der Reaktivrest an die Diazokomponente oder an die Kupplungskomponente gebunden ist, oder je ein Reaktivrest an die Diazokomponente und an die Kupplungskomponente gebunden ist.

h) Reaktivfarbstoffe gemäss c), der Formel

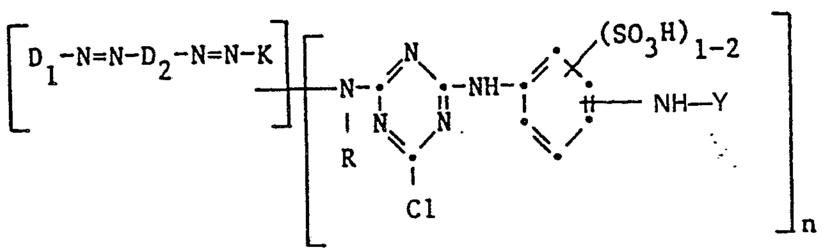

(3) ,

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, Y die unter der Formel (1) angegebene Bedeutung hat, und der Reaktivrest an die Diazokomponente $D_1$ oder an die Kupplungskomponente K gebunden ist, oder je ein Reaktivrest an $D_1$ und K gebunden ist.

i) Reaktivfarbstoffe gemäss c), der Formel

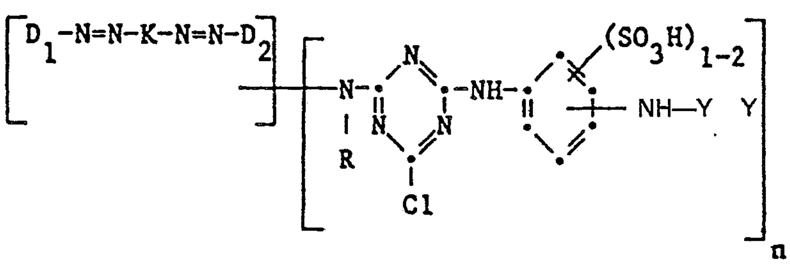

(4) ,

worin $D_1$ und $D_2$ je ein Rest einer Diazokomponente der Benzol- oder Naphthalinreihe, K der Rest einer Kupplungskomponente der Aminonaphtholsulfonsäure-Reihe, R Wasserstoff, Methyl oder Aethyl, und n = 1 oder 2 ist, Y die unter der Formel (1) angegebene Bedeutung hat, und der Reaktivrest an die Diazokomponente $D_1$ oder an die Diazokomponente $D_2$ gebunden ist, oder je ein Reaktivrest an $D_1$ und $D_2$ gebunden ist.

j) 1:1-Kuperkomplexe von Reaktivfarbstoffen gemäss g) bis i).

Das Verfahren zur Herstellung von Reaktivfarbstoffen der Formel (1) ist dadurch gekennzeichnet, dass man organische Farbstoffe der Formel

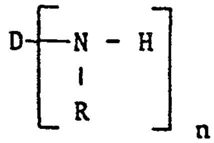

(5)

oder Farbstoffvorprodukte, mindestens ein Aequivalent eines Triazins der Formel

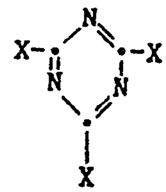

(6) ,

mindestens ein Aequivalent einer Verbindung der Formel

H—B—H (7)

und mindestens ein Aequivalent eines den Rest Y einführenden Mittels in beliebiger Folge zu einem Reaktivfarbstoff der Formel (1) kondensiert, wobei D, R, n, X und B in den Formeln (5) bis (7) sowie Y die unter Formel (1) angegebenen Bedeutungen haben, und dass man im Falle der Verwendung von Farbstoffvorprodukten, diese in die gewünschten Endfarbstoffe umwandelt.

Gegebenenfalls wird an das erfindungsgemässe Verfahren eine weitere Umwandlungsreaktion angeschlossen. Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Da unter bestimmten Voraussetzungen Hydrolyse eines Halogentriazinrestes eintritt, muss ein Zwischenprodukt, welches Acetylaminogruppen enthält, zwecks Abspaltung der Acetylgruppen verseift werden, bevor mit einem Halogentriazin kondensiert wird. Welche Reaktion z.B. bei der Herstellung eines sekundären Kondensationsproduktes aus einer Verbindung der Formel (7), dem Triazin der Formel (6) und dem organischen Farbstoff der Formel (5) oder einem Vorprodukt zweckmässigerweise zuerst ausgeführt wird, die des Triazins mit der Verbindung der Formel (7) oder mit dem organischen Farbstoff oder einem Vorprodukt des Farbstoffs, ist von Fall zu Fall verschieden und richtet sich vor allem nach der Löslichkeit der beteiligten Aminoverbindungen und der Basizität der zu acylierenden Aminogruppen.

Die Verfahrensvariante, bei welcher man von Farbstoffvorprodukten ausgeht, ist geeignet zur Herstellung von Reaktivfarbstoffen der formel (1), worin D der Rest eines aus zwei oder mehr als zwei Komponenten zusammengesetzte Farbstoffe sind: Monoazo-, Disazo-, Trisazo-, Metallkomplexazo-, Formazan- und Azomethinfarbstoffe. Grundsätzlich lassen sich die Reaktivfarbstoffe der Formel (1) sämlicher Farbstoffklassen in an sich bekannter Weise oder analog zu bekannten Verfahrensweisen herstellen, indem man von Vorprodukten oder Zwischenprodukten für Farbstoffe, die faserreaktive Reste gemäss Formel (1) enthalten, ausgeht, oder diese faserreaktiven Reste in hierfür geeignete Zwischenprodukte mit Farbstoffcharakter einführt.

Bevorzugt sind Reaktivfarbstoffe der Formel (1), worin D der Rest eines Mono- oder Disazofarbstoffes oder eines Metallkomplexazofarbstoffes ist. In diesem Falle sind die Reaktivreste der Formel

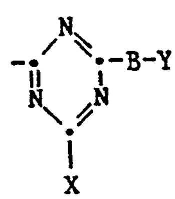

(8)

an die Diazo- oder Kupplungskomponente, oder, falls n = 2 ist, an verschiedene oder gleiche Reste von Ausgangskomponenten, d.h. Diazo- oder Kupplungskomponenten, gebunden. Vorzugsweise sind, für den Fall, dass n = 2 ist, die beiden Reaktivreste an je eine Komponente, Daizokomponente oder Kupplungskomponente, gebunden. Die Reaktivfarbstoffe haben dann z.B. die Formeln

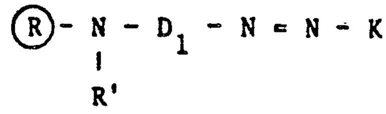 (9) ,

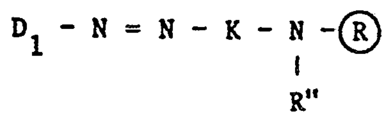 (10) ,

und 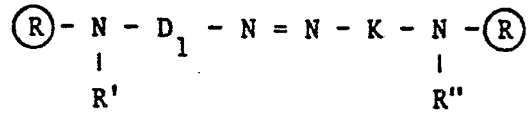 (11) ,

worin R′ und R″ unabhängig voneinander die gleich Bedeutung haben wie R in der Formel (1), $D_1$ der Rest einer Diazokomponente, und K der Rest einer Kupplungskomponente ist, und Ⓡ einen Reaktivrest der Formel (8) bedeutet. In Betracht zu ziehen sind auch Reaktivfarbstoffe der Formeln (9) bis (11), worin der Rest $D_1$ und/oder K noch einen weiteren Reaktivrest einschliesst, so dass auch tri- und höher-reaktive Farbstoffe umfasst sind. Die zusätzlichen, in $D_1$ oder K eingeschlossenen Reaktivreste können, wie Ⓡ, über Aminogruppen, oder in anderer Weise, z.B. durch eine direkte Bindung an $D_1$ bzw. K gebunden sein./

Ein gegebenenfalls in $D_1$ oder K eingeschlossener zusätzlicher Reaktivrst ist insbesondere ein niedrigmolekularer, durch ein abspaltbares Atom oder eine abspaltbare Gruppe substituierter Alkanoyl- oder Alkylsulfonylrest, ein niedrigmolekularer, gegebenenfalls durch ein abspaltbares Atom oder eine abspaltbare Gruppe substituierter Alkenoyl- oder Alkensulfonylrest, ein über eine Carbonyl- oder Sulfonylgruppe, durch ein abspaltbares Atom oder eine abspaltbare Gruppe substituierter carbo- oder heterocyclischer 4-, 5- oder 6-Ringe enthaltender Rest oder ein direkt über ein Kohelnstoffatom gebundener, durch ein abspaltbares Atom oder eine abspaltbare Gruppe substituierter Triazin- oder Pyrimidinrest, oder enthält einen solchen. Als Beispiele für derartige Reaktivreste seien genannt, ein über eine Aminogruppe gebundener, Halogenatome enthaltender sechsgliedriger heterocyclischer Rest, wie ein Halogentriazin- oder Halogenpyrimidinrest oder ein aliphatischer Acylrest, wie ein Halogenacetyl- oder Halogenpropionylrest.

Insbesondere ist der zusätzliche Reaktivrest ein direkt oder über ein Brückenglied gebundener Vinylsulfonyl-, β-Sulfatoäthylsulfonyl-, β-Thiosulfatoäthylsulfonyl-, β-Chloräthylsulfonyl- oder β-Acetoxyäthylsulfonyl-Rest.

Die obigen Erläuterungen gelten sinngemäss auch für Disazofarbstoffe und Metallkomplexazofarbstoffe, sowie für andere in der Definition des Farbstoffrestes D in Formel (1) genannte Chromophore.

Falls man von Farbstoffvorprodukten ausgeht, gelangt man zu den Reaktivfarbstoffen der Formel (1), indem man eine Komponente des Farbstoffes der Formel (5), die eine Gruppe —N(R)H enthält, und ein Triazin der Formel (6) kondensiert, vorher oder nachher mit einer Verbindung der Formel (7) kondensiert, und mit der anderen Komponente des Farbstoffes der Formel (5) umsetzt. Bei der Herstellung der bevorzugten Azofarbstoffe müssen die Diazokomponenten und die Kupplungskomponenten zusammen mindestens eine Aminogruppe —N(R)H, und können weitere Aminogruppen enthalten. Man verwendet in diesem Falle als Diazokomponenten vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure. Gegebenenfalls verwendet man entsprechende Acetylamino- oder Nitroverbindungen, worin die Acetylamino- bzw. Nitrogruppe vor der Kondensation mit dem 2,4,6-Trihalogen-triazin durch Verseifen bzw. Reduzieren in die $H_2N$-Gruppe übergeführt wird.

Liegen in den hergestellten Reaktivfarbstoffen zur Metallkomplexbildung befähigte Gruppen, wie Hydroxy, Carboxy, Amino oder Sulfo, vor, können die Reaktivfarbstoffe auch nachträglich metallisiert werden. Beispielsweise erhält man Metallkomplexazofarbstoffe, indem man erfindungsgemäss erhaltene Azoverbindungen, welche in ortho-ortho′-Stellung zur Azobrücke komplexbildende Gruppen, z.B. Hydroxy- oder Carboxygruppen, enthalten, vor oder gegebenenfalls auch nach der Kondensation mit dem 2,4,6-Trihalogen-triazin der Formel (6) mit schwermetallabgebenden Mitteln behandelt. Von besonderem Interesse sind Kupferkomplexe von Reaktivfarbstoffen der Formel (1). Als Methode der Metallisierung kommt ausser der oben genannten auch die entalkylierende Metallisierung und, für die Herstellung von Kupferkomplexen, die oxydative Kupferung in Betracht.

Die wichtigsten Verfahrensvarianten sind in den Ausführungsbeispielen dargestellt.

Im folgenden sollen mögliche Ausgangsstoffe, die zur Herstellung der Reaktivfarbstoffe der Formel (1) verwendet werden können, einzeln genannt werden.

Organische Farbstoffe der Formel (5)

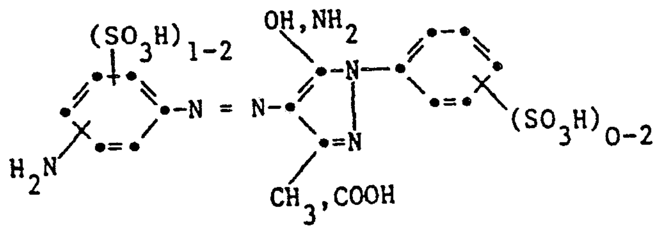

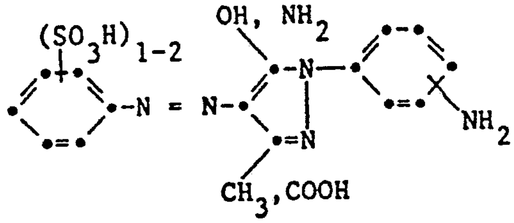

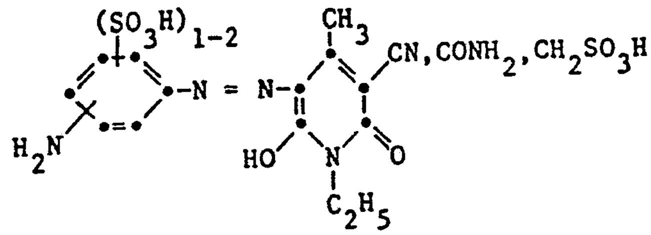

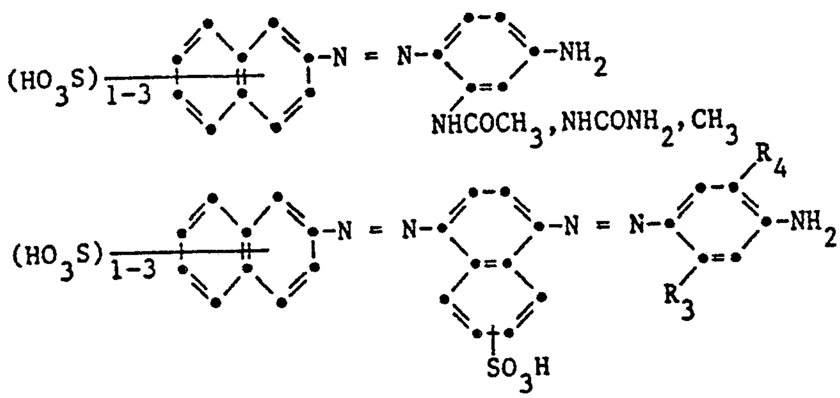

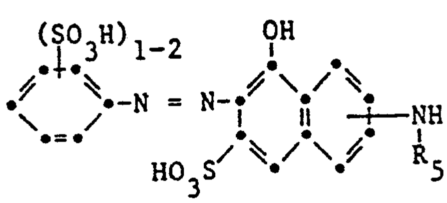

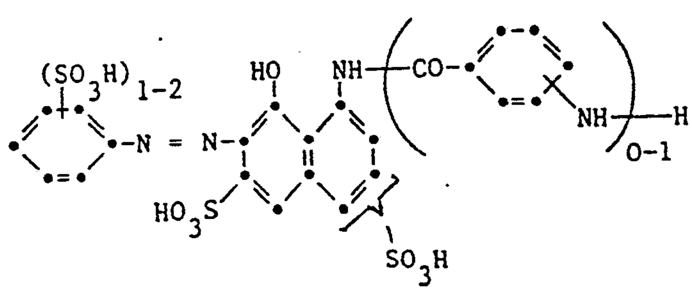

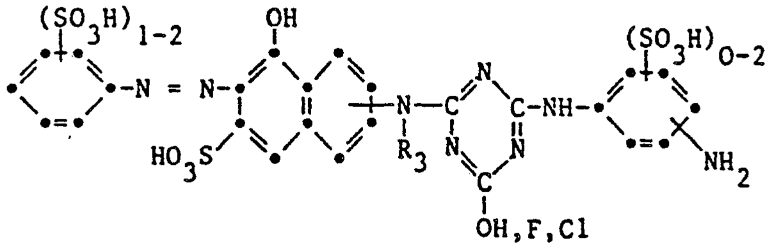

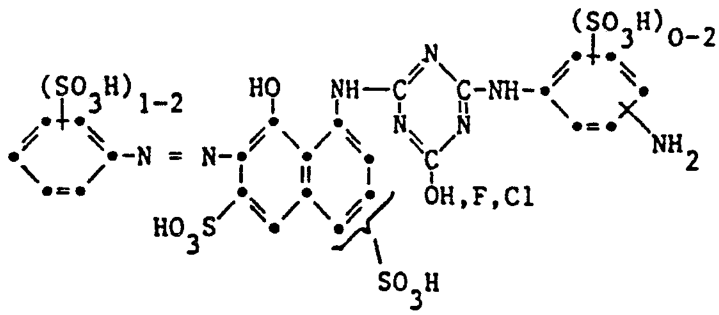

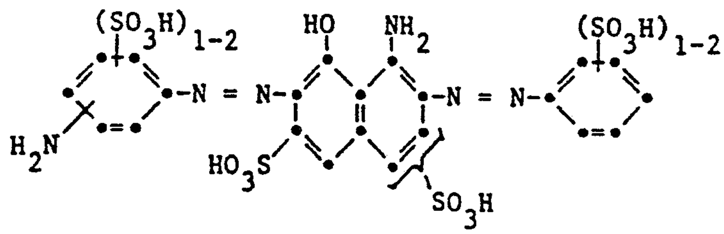

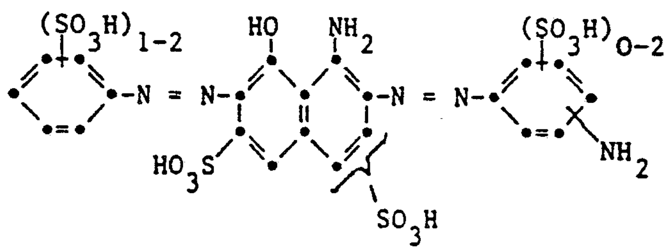

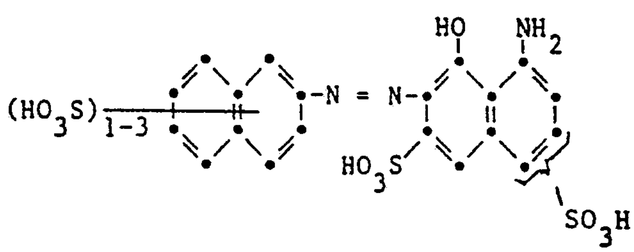

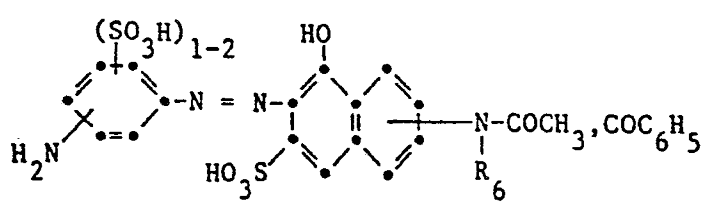

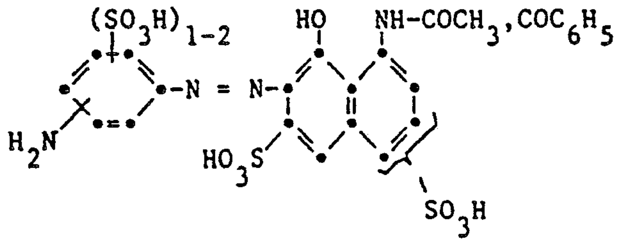

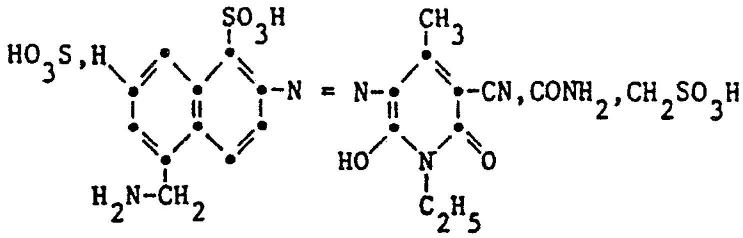

Metallkomplexe von Farbstoffen der Formeln:

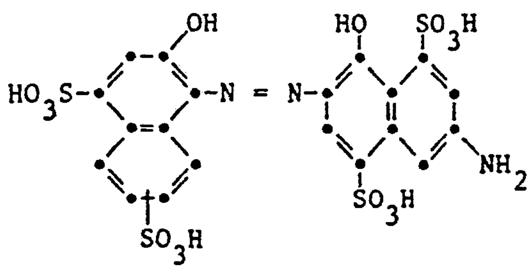

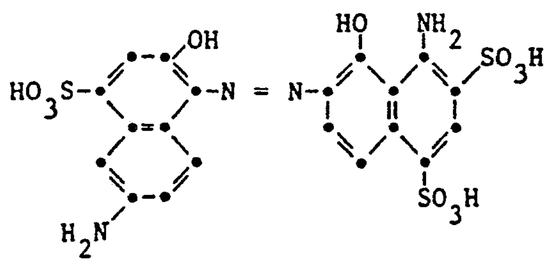

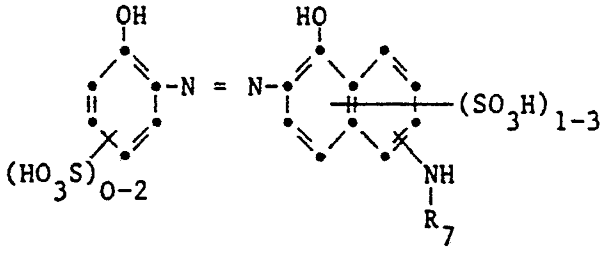

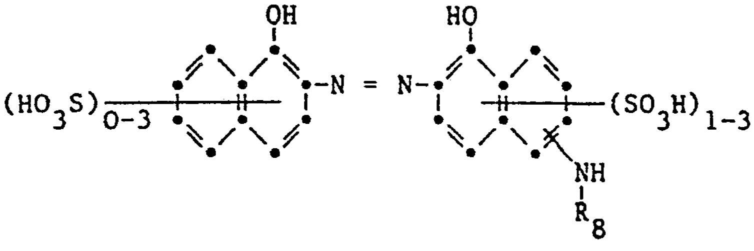

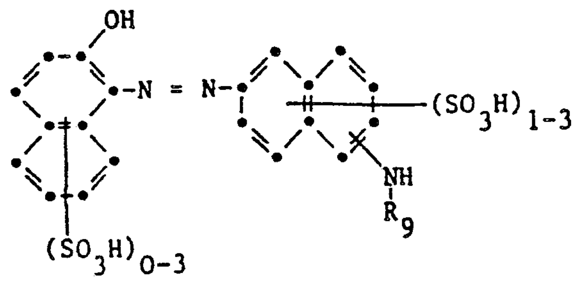

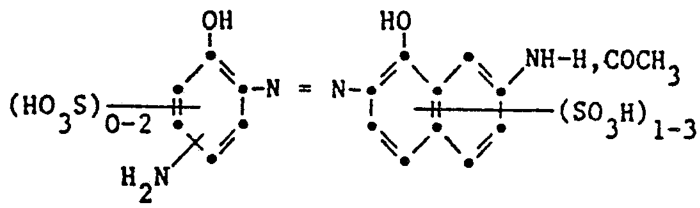

Als Metallatome sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h. die können symmetrisch oder mis beliebigen anderen Liganden unsymmetrisch aufgebaut sein.

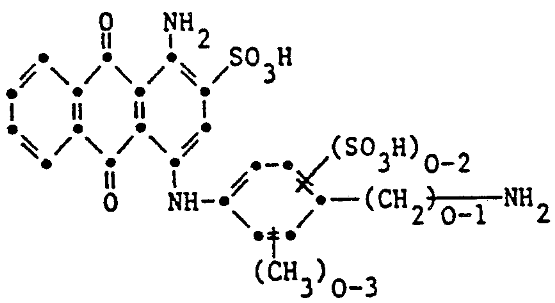

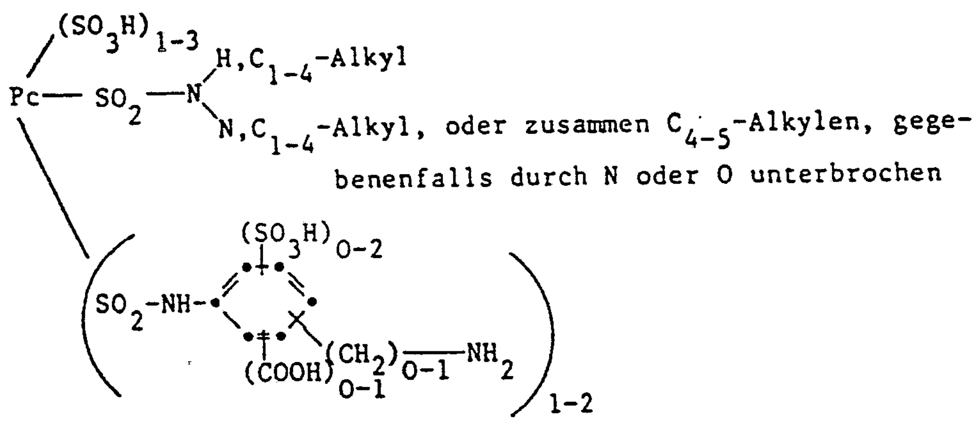


In dieser Formel steht Pc für den Cu- oder Ni-Phthalocyaninrest, die Gesamtzahl der Substituenten am Pc-Gerüst ist 4.

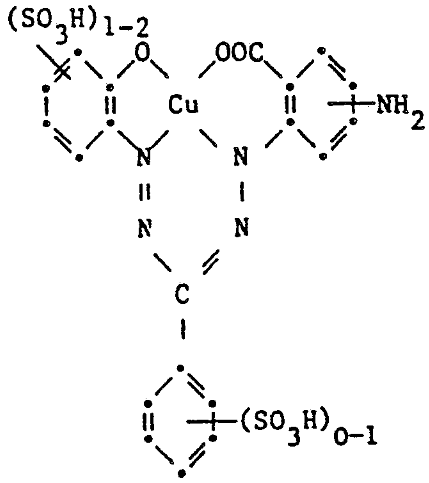

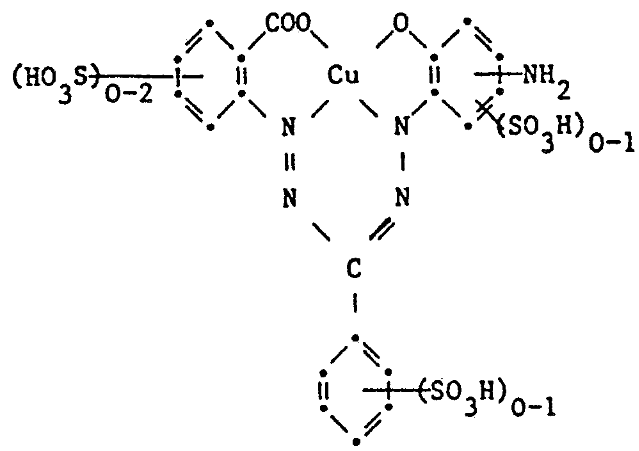

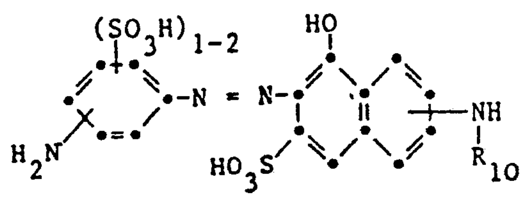

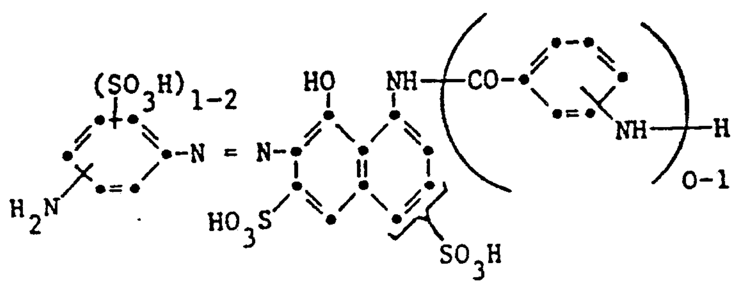

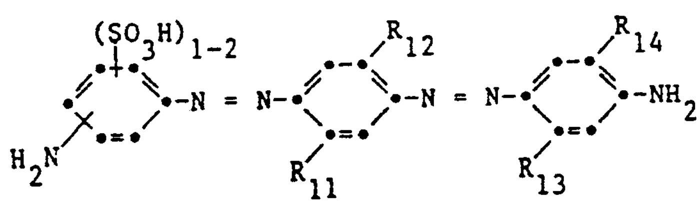

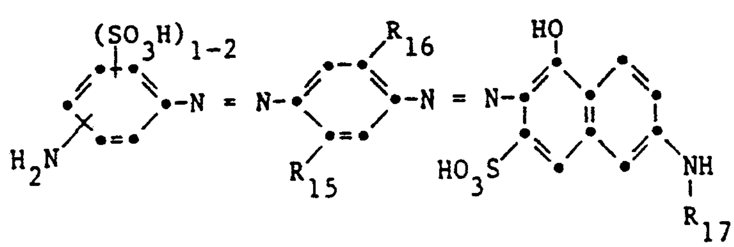

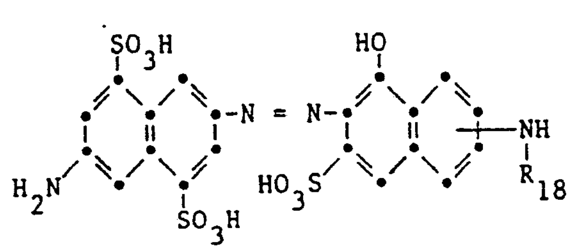

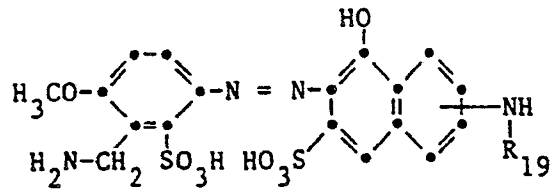

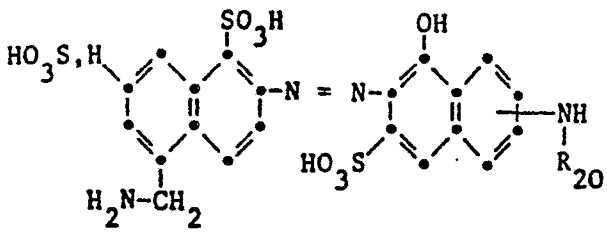

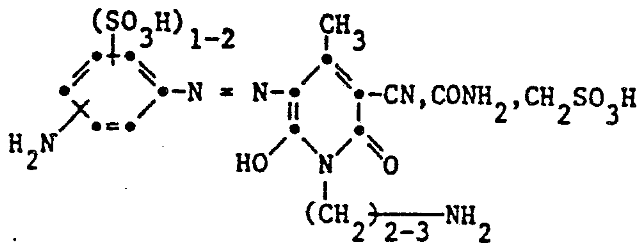

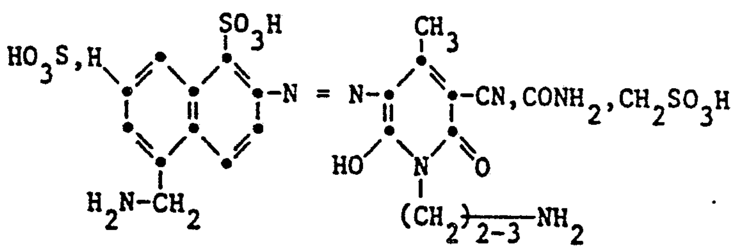

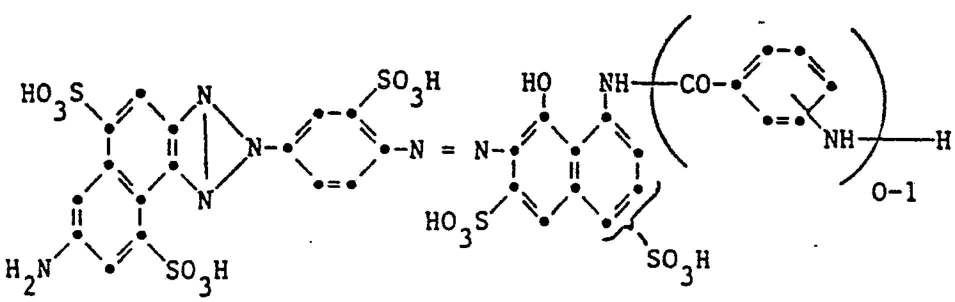

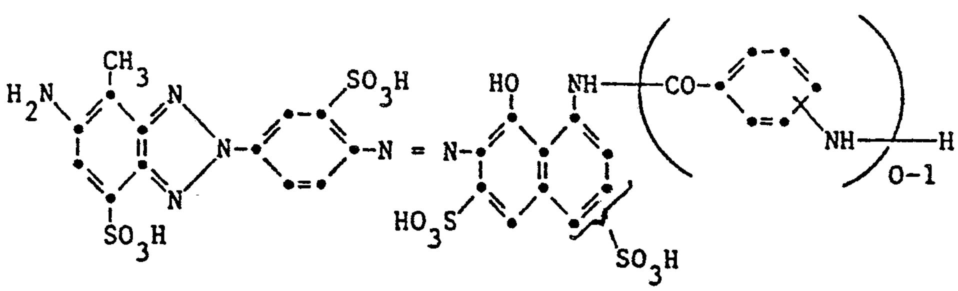

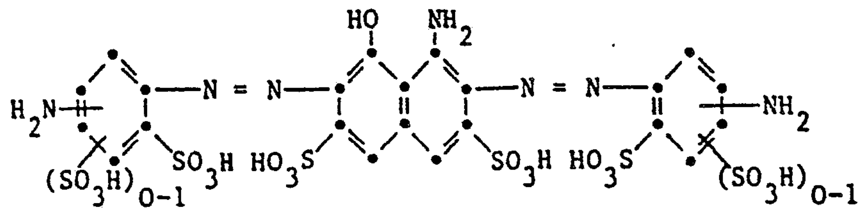

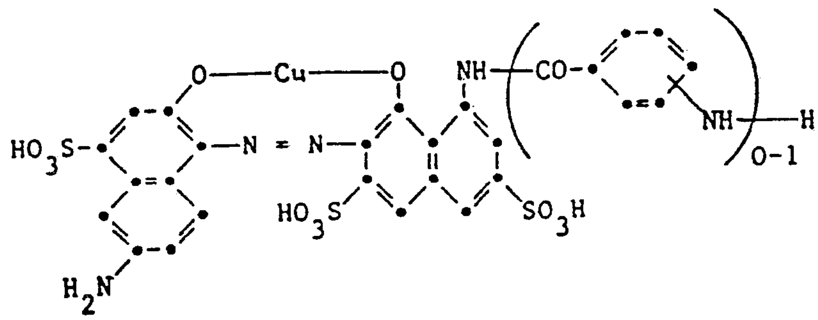

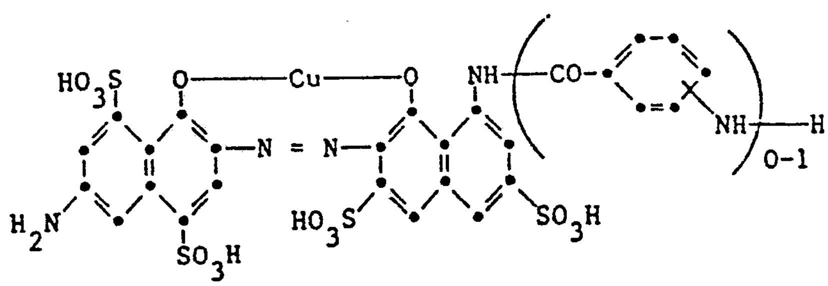

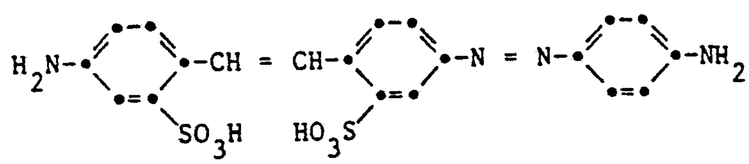

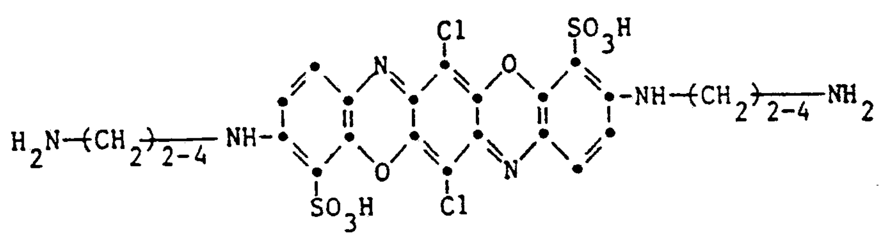

In den oben aufgefürten Formeln bedeuten die Reste $R_5$ bis $R_{10}$ und $R_{17}$ bis $R_{20}$ Wasserstoff oder $C_{1-4}$-Alkyl, und die Reste $R_3$, $R_4$ und $R_{11}$ bis $R_{16}$ Wasserstoff, $C_{1-4}$-Alkyl, $C_{1-4}$-Alkoxy, $C_{1-4}$-Alkanoylamino, Ureido, oder Halogen, wobei die Reste $R_3$, $R_4$, ... etc., die zu ein und derselben Formel gehören, voneinander unabhängig sind. Vorzugsweise bedeuten die Reste $R_5$ bis $R_{10}$ und $R_{17}$ bis $R_{20}$ Wasserstoff, Methyl oder Aethyl, und die Reste $R_3$, $R_4$ und $R_{11}$ bis $R_{16}$ Wasserstoff, Methyl, Aethyl, Methoxy, Aethoxy, Acetylamino, Ureido oder Chlor. Die aromatischen Ringe in den obigen Farbstoffen können weitersubstituiert sein, die Benzolringe von allem durch Methyl, Methoxy, Aethoxy, Carboxy, Acetylamino oder Chlor, und die Naphthalinringe insbesondere durch Methoxy, Carboxy, Acetylamino, Nitro oder Chlor; gleiches gilt für die Anthracinone, Dioxazine usw. Vorzugsweise sind die Benzolringe nicht weitersubstituiert. Als Diazokomponenten werden in diesem Falle vor allem die 1,3-Phenylendiamin-4-sulfonsäure, 1,4-Phenylendiamin-2-sulfonsäure, 1,4-Phenylendiamin-2,5-disulfonsäure oder 1,3-Phenylendiamin-4,6-disulfonsäure verwendet.

Als Diazo- und Kupplungskomponenten einzeln genannt:

Diazokomponenten:

Aminobenzol, 1-Amino-2-, -3- oder -4-methylbenzol, 1-Amino-2-, -3- oder -4-methoxybenzol, 1-Amino-2-, -3- oder -4-chlorobenzol, 1-Amino-2,5-dichlorbenzol, 1-Amino-2,5-dimethylbenzol, 1-Amino-3-methyl-6-methoxybenzol, 1-Amino-2-methoxy-4-nitrobenzol, 4-Aminobiphenyl, 1-Aminobenzol- 2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-tri fluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1 - Amino - 2,4 - dimethoxybenzol - 6 - sulfonsäure, 1 - Amino - 2,5 - dimethoxybenzol - 4 - sulfonsäure, 1 - Amino - 3 - acetylaminobenzol - 6 - sulfonsäure, 1 - Amino - 4 - acetylaminobenzol - 2 - sulfonsäure, 1 - Amino - 3 - acetylamino - 4 - methylbenzol - 6 - sulfonsäure, 2 - Amino - 1 - methylbenzol - 3,5 - disulfonsäure, 1 - Amino - 4 - methoxybenzol - 2,5 - disulfonsäure, 1-Amino-3- oder -4-nitrobenzol-6-sulfonsäure, 1-Aminonaphthalin, 2-Amino-naphthalin, 1-Amino-naphthalin-2-, -4-, -5-, -6-, -7- oder -8-sulfonsäure, 2-Aminonaphthalin-1-, -3-, -4-, -5-, -6-, -7- oder -8-sulfonsäure, 2-Aminonaphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1 - Hydroxy - 2 - amino - 4 - acetylaminobenzol - 6 - sulfonsäure, 1 - Hydroxy - 2 - amino - 6 - acetylaminobenzol - 4 - sulfonsäure, 1 - Hydroxy - 2 - amino - 4 - chlorbenzol - 5 - sulfonsäure, 1 - Hydroxy - 2 - amino - 4 - methylsulfonylbenzol, 1 - Amino - 2 - hydroxy - 6 - nitronaphthalin - 4 - sulfonsäure, 2 - Amino - 1 - hydroxynaphthalin - 4,8 - disulfonsäure, 4 - Aminoazobenzol - 3,4' - disulfonsäure, 3 - Methoxy - 4 - amino - 6 - methylazobenzol - 2',4' - disulfonsäure, 3 - Methoxy - 4 - amino - 6 - methylazobenzol - 2',5' - disulfonsäure, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 1,3-Diamino-4-nitrobenzol, 4,4'-Diaminostilben, 4,4'-Diaminodiphenylmethan, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxybenzidin, 2,2'-Dimethylbenzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsaüre, 1,3-Diamino-6-methylbenzol-4-sulfonsäure, 3-(3'- bzw. 4'-Aminobenzoylamino)-1-aminobenzol-6-sulfonsäure, 1 - (4' - Aminobenzoylamino) - 4 - aminobenzol - 2,5 - disulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diaminobenzol-2-methylbenzol, 4,4'-Diaminodiphenyloxid, 4,4' - Diaminodiphenylharnstoff - 2,2' - disulfonsäure, 4,4' - Diaminodiphenyloxyäthan - 2,2' - disulfonsäure, 4,4' - Diaminostilben - 2,2' - disulfonsäure, 4,4' - Diaminodiphenyläthan - 2,2' - disulfonsäure, 2 - Amino - 5 - aminomethylnaphthalin - 1 - sulfonsäure, 2 - Amino - 5 - aminomethylnaphthalin - 1,7 - disulfonsäure, 1 - Amino - 4 - methoxy - 5 - aminomethylbenzol - 6 - sulfonsäure.

Wenn als Diazokomponente statt eines Diamins eine Amino-acetylaminoverbindung eingesetzt werden soll, aus welcher nachträglich die Acetylgruppe durch Verseifen wieder abgespalten wird, wie dies oben in den Erläuterungen der Verfahrensvarianten beschrieben ist, kommen die Monoacetylverbindungen der oben genannten Diazokomponenten in Frage, z.B. 1-Acetylamino-3-aminobenzol-4-sulfonsäure oder 1-Acetylamino-4-aminobenzol-3-sulfonsäure.

Kupplungskomponenten

Phenol, 1-Hydroxy-3- oder -4-methylbenzol, 1-Hydroxybenzol-4-sulfonsäure, 1-Hydroxynapthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder -4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1 - Amino - 2 - methoxynaphthalin - 6 - sulfonsäure, 2 - Aminonaphthalin - 5,7 - disulfonsäure, 1 - Amino - 8 - hydroxynaphthalin - 4 - sulfonsäure, 1 - Amino - 8 - hydroxynaphthalin - 6 - sulfonsäure, 1 - Amino - 8 - hydroxynaphthalin - 2,4 - disulfonsäure, 2 - Hydroxy - 3 - aminonaphthalin - 5,7 - disulfonsäure, 1 - Amino - 8 - hydroxynaphthalin - 2,4,6 - trisulfonsäure, 1 - Hydroxy - 8 - acetylaminonaphthalin - 3 - sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw- 2 - Aethylamino - 5 - hydroxynaphthalin - 7 - sulfonsäure, 2 - (N - Acetyl - N - methylamino) - 5 - hydroxynaphthalin - 7 - sulfonsäure, 2 - Acetylamino - 5 - hydroxynaphthalin - 7 - sulfonsäure, 2 - Amino - 5 - hydroxynaphthalin - 1,7 - disulfonsäure, 2 - Amino - 8 - hydroxynaphthalin - 6 - sulfonsäure, 2-Methyl- bzw. -Aethylamino - 8 - hydroxynaphthalin - 6 - sulfonsäure, 2 - (N - Acetyl - N - methylamino) - 8 - hydroxynaphthalin - 6 - sulfonsäure, 2 - Acetylamino - 8 - hydroxynaphthalin - 6 - sulfonsäure, 2 - Amino - 8 - hydroxynaphthalin - 3,6 - disulfonsäure, 2 - Acetylamino - 8 - hydroxynaphthalin - 3,6 - disulfonsäure, 1 - Amino - 5 - hydroxynaphthalin - 7 - sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Aminobenzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2 - (4' - Amino-3' - sulfophenylamino) - 5 - hydroxynaphthalin - 7 - sulfonsäure, 3-Methylpyrazolon-(5), 1-Phenyl-3-methyl-5-pyrazolon, 1 - (4' - Sulfophenyl) - 3 - methyl - 5 - pyrazolon, 1 - (4' - Sulfophenyl) - pyrazolon - (5) - 3 - carbonsäure, 1 - (3' - Aminophenyl) - 3 - methyl - 5 - pyrazolon, 1 - (2',5' - Disulfophenyl) - 3 - methyl - 5 - pyrazolon, 1 - (2' - Methyl - 4' - sulfophenyl) - 5 - pyrazolon - 3 - carbonsäure, 1 - (4',8' - Disulfonaphthyl - [2']) - 3 - methyl - 5 - pyrazolon, 1 - (5',7' - Disulfonaphthyl - [2']) - 3 - methyl - 5 - pyrazolon, 1 - (2',5' - Dichlor - 4' - sulfophenyl) - 3 - methyl - 5 - pyrazolon, 3 - Aminocarbonyl - 4 - methyl - 6 - hydroxypyridon - (2), 1-Aethyl-3-cyan- oder -3-chlor-4-methyl-6-hydroxypyridon-(2), 1 - Aethyl - 3 - sulfomethyl - 4 - methyl - 6 - hydroxypyridon - (2), 2,4,6 - Triamino - 3 - cyanpyridin, 2 - (3' - Sulfophenylamino) - 4,6 - diamino - 3 - cyanpyridin, 2 - (2' - Hydroxyäthylamino) - 3 - cyan - 4 - methyl - 6 - aminopyridin, 2,6 - Bis - (2' - hydroxyäthylamino) - 3 - cyan - 4 - methylpyridin, 1 - Aethyl - 3 - carbamoyl - 4 - methyl - 6 - hydroxypyridon - (2), 1 - Aethyl - 3 - sulfomethyl - 4 - methyl - 5 - carbamoyl - 6 - hydroxypyridon - (2), N-Acetoacetylaminobenzol, 1 - (N - Acetoacetylamino) - 2 - methoxybenzol - 5 - sulfonsäure, 4 - Hydroxychinolon - (2), 1 - Amino - 8 - hydroxy - 2 - (phenylazo) - naphthalin - 3,6 - disulfonsäure, 1 - Amino - 8 - hydroxy - 2 - (4' - sulfophenylazo - naphthalin - 3,6 - disulfonsäure, 1 - Amino - 8 - hydroxy - 2 - (2',5' - disulfophenylazo) - naphthalin - 3,6 - disulfonsäure, 1 - β - Aminoäthyl - 3 - cyan - 4 - methyl - 6 - hydroxypyridon - (2), 1 - γ - Aminopropyl - 3 - sulfomethyl - 4 - methyl - 6 - hydroxypyridon - (2), 1,3 - Diaminobenzol, 1 - Amino - 3 - N,N - di - β - hydroxyäthylaminobenzol, 1 - Amino - 3 - N,N - di - β - sulfatoäthylaminobenzol, 1 - Amino - 3 - N,N - di - β - hydroxyäthylamino - 4 - methoxybenzol, 1 - Amino - 3 - N,N - di - β - sulfatoäthylamino - 4 - methoxybenzol, 1 - Amino - 3 - sulfo - benzylamino - benzol, 1 - Amino - 3 - sulfo - benzylamino - 4 - chlorbenzol, 1 - Amino - 3 - N,N - di - sulfobenzylaminobenzol.

Triazine der Formel (6)

2,4,6-Trifluor-s-triazin (Cyanurfluorid), 2,4,6-Trichlor-s-triazin (Cyanurchlorid), 2,4,6-Tribrom-s-triazin (Cyanurbromid).

Verbindungen der Formel (7)

Methylendiamin, Aethylendiamin, n-Propylendiamin, n-Butylendiamin, 1-Methyl-n-propylendiamin, n-Hexylendiamin, 2-Aethyl-n-butylendiamin, 1,3-Diaminobenzol, 1,4-Diaminobenzol, 1,3-Diamino-4-chlorbenzol, 1,3-Diamino-4-methylbenzol, 1,3-Diamino-4-äthylbenzol, 1,3-Diamino-4-methoxybenzol, 1,3-Diamino-4-äthoxybenzol, 1,4-Diamino-2-methylbenzol, 1,4-Diamino-2-methoxybenzol, 1,4-Diamino-2-äthoxybenzol, 1,4-Diamino-2-chlorbenzol, 1,4-Diamino-2,5-dimethylbenzol, 1,4-Diamino-2,5-diäthylbenzol, 1,4-Diamino-2-methyl-5-methoxybenzol, 1,4-Diamino-2,5-dimethoxybenzol, 1,4-Diamino-2,5-diäthoxybenzol, 2,6-Diamino-naphthalin, 1,3-Diamino-2,4,6-trimethylbenzol, 1,4-Diamino-2,3,5,6-tetramethylbenzol, 4,4'-Diaminostilben, 4,4'-Diaminobiphenyl (Benzidin), 3,3'-Dimethylbenzidin, 3,3'-Dimethoxybenzidin, 3,3'-Dichlorbenzidin, 3,3'-Dicarboxybenzidin, 3,3'-Dicarboxymethoxy-benzidin, 2,2'-Dimethyl-benzidin, 4,2'-Diaminodiphenyl (Diphenylin), 2,6-Diaminonaphthalin-4,8-disulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4-sulfonsäure, 1,3-Diaminobenzol-4,6-disulfonsäure, 1,4-Diamino-2-chlorbenzol-5-sulfonsäure, 1,4-Diamino-2-methylbenzol-5-sulfonsäure, 1,5-Diamino-6-methylbenzol-3-sulfonsäure, 1,3-Diamino-6-methylbenzol-4-sulfonsäure, 1,4-Diaminobenzol-2-carbonsäure, 1,3-Diaminobenzol-4-carbonsäure, 1,2-Diaminobenzol-4-carbonsäure, 1,3-Diaminobenzol-5-carbonsäure, 1,4-Diamino-2-methylbenzol, 4,4'-Diaminostilben-2,2'-disulfonsäure.

Reaktivkomponenten (Y)

Die Halogenide der weiter vorn genannten Reste Y, z.B. 4-(β-Chloräthylsulfonyl)-butyrylchlorid, 4-Vinylsulfonyl-butyrylchlorid.

Die Diazotierung der Diazokomponenten bzw. der eine diazotierbare Aminogruppe enthaltenden Zwischenprodukte erfolgt in der Regel durch Einwirkung salpetriger Säure in wässrig-mineralsaurer Lösung bei tiefer Temperatur. Die Kupplung auf die Kupplungskomponente erfolgt bei stark sauren, neutralen bis schwach alkalischen pH-Werten.

Die Kondensation des 2,4,6-Trihalogen-s-triazins mit den organischen Farbstoffen der Formel (5) bzw. den eine Gruppe —N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5°C und bei schwach saurem, neutralem bis schwach alkalischem pH-Wert. Vorteilhaft wird der bei der Kondensation freiwerdende Halogenwasserstoff laufend durch Zugabe wässriger Alkalihydroxide, -carbonate oder -bicarbonate neutralisiert. Für die weitere Umsetzung der so erhaltenen Halogentriazinfarbstoffe bzw. für die Umsetzung des 2,4,6-Trihalogen-s-triazins mit den Verbindungen der Formel (7) setzt man die freien Amine oder deren Salze, bevorzugt in Form des Hydrochlorids, ein. Die Umsetzung wird bei Temperaturen etwa zwischen 0 und 40°, bevorzugt zwischen 5 und 25°C, unter Zusatz säurebindender Mittel, bevorzugt Natriumcarbonat, in einem pH-Bereich von 2 bis 8, bevorzugt 5 bis 6,5, durchgeführt.

Die Kondensation des Halogentriazins mit einer Verbindung der Formel (7) kann vor oder nach der Kondensation des Halogentriazins mit einem Farbstoff der Formel (5) geschehen. Die Kondensation des Halogentriazins mit einer Verbindung der Formel (7) erfolgt vorzugsweise in wässriger Lösung oder Suspension, bei niedriger Temperatur und bei schwach saurem bis neutralem pH-Wert. Auch hier wird der bei der Kondensation freiwerdende Halogenwasserstoff vorteilhafterweise durch laufende Zugabe von wässrigen Alkalihydroxiden, -carbonaten oder -bicarbonaten neutralisiert.

Die Kondensation der Verbindung der Formel (7) mit einem den Rest Y einführenden Mittel erfolgt ebenfalls vorzugsweise in wässriger Lösung oder Suspension, bei niedrigen Temperaturen, und bei schwach saurem, neutralem bis schwach alkalischem pH-Wert, sowie in Gegenwart eines säurebindenden Mittels.

Die Reaktivfarbstoffe der Formel (1) eignen sich zum Färben und Bedrucken der verschiedensten Materialien, wie Seide, Leder, Wolle, Polyamidfasern und Polyurethanen, und insbesondere cellulosehaltiger Fasermaterialien aller Art. Solche Fasermaterialien sind beispielsweise die natürliche Cellulosefaser, wie Baumwolle, Leinen und Hanf, sowie Zellstoff und regenerierte Cellulose. Die Reaktivfarbstoffe der Formel (1) sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulardfärbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen und Drucke mit kaltem und heissem Wasser, gegebenenfalls unter Zusatz eines dispergierend wirkenden und die Diffusion der nicht fixierten Anteile fördernden Mittels gründlich gespült.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch. und die nicht fixierten Anteile können leicht ausgewaschen werden, wobei die Differenz zwischen Ausziehgrad und Fixiergrad bemerkenswert klein, d.h. der Seifverlust sehr gering ist. Die Reaktivfarbstoffe der Formel (1) eignen sich auch zum Druck, vor allem auf Baumwolle, ebenso aber auch zum Bedrucken von stickstoffhaltigen Fasern, z.B. von Wolle, Seide oder Wolle enthaltenden Mischgeweben.

Die mit den erfindungsgemässen Farbstoffen hergestellten Färbungen und Drucke auf Cellulosefasermaterialien besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Die Herstellung der Monoazo- oder Disazozwischenverbindung ist in den nachfolgenden Ausführungsbeispielen nicht in allen Fällen beschrieben, sie ergibt sich jedoch ohne weiteres aus der allgemeinen Beschreibung.

Allgemeines Herstellungsverfahren I:

20,1 Teile 1-Amino-4-(2,3-dibrompropionylamino)-benzol-2-sulfonsäure werden in 500 ml Waser neutral gelöst und die Lösung auf 0 bis 5° abgekühlt. Bei dieser Temperatur werden 7,1 Teile 2,4,6-Trifluor-1,3,5-triazin innert 20 Minuten zugetropft, wobei der pH der Reaktionsmischung durch gleichzeitige Zugabe von 2n Natriumhydroxydlösung bei 6,5 gehalten wird. Nach Zusatz einer neutralen Lösung von 35,2 Teilen des Farbstoffes der Formel

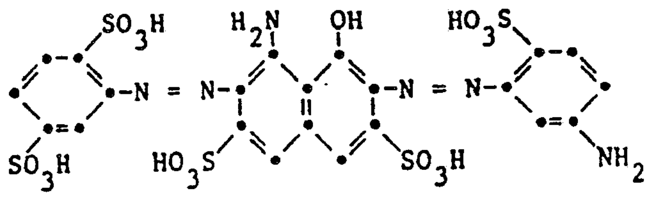

in 300 ml Wasser wird die Temperatur innert 2 bis 3 Stunden auf 20 bis 25° erhöht und dabei der pH der Reaktionsmischung durch ständige Zugabe von 2n Natriumhydroxydlösung bei 6,5 bis 7,5 gehalten. Nach vollständiger Reaktion wird die Reaktionsmischung geklärt und der gebildete Reaktivfarbstoff der Formel (die Verbindung fällt nicht unter den Anspruchswort-Lant und dient lediglich zur Veranschaulichung des Verfahrens):

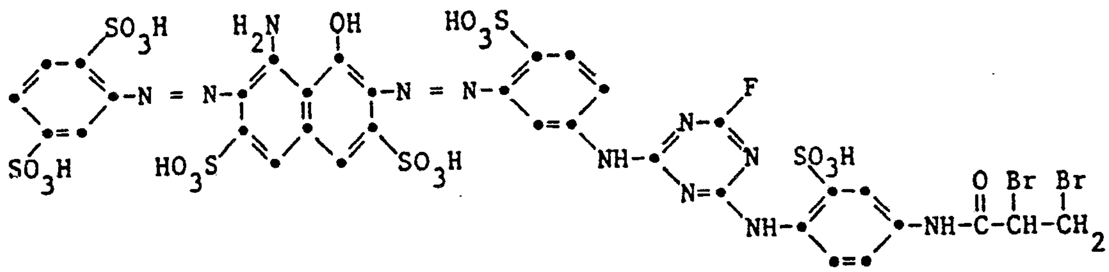

bei pH 6,5 durch Eintragen von Kaliumchlorid ausgesalzen, filtriert, gewaschen und im Vakuum getrocknet. Er färbt Baumwolle in blauen Tönen.

Wertvolle Reaktivfarbstoffe, die Baumwolle in den in Tabelle 1, Spalte 4, angegebenen Farbtönen färben, werden erhalten, wenn man das in Spalte 2 angegebene aminogruppenhaltige Zwischenprodukt gemäss den Angaben in Beispiel 1 zuerst mit 2,4,6-Trifluor-1,3,5-triazin oder mit 2,4,6-Trichlor-1,3,5-triazin und dann mit dem in Spalte 3 angegebenen aminogruppenhaltigen Chromophor umsetzt.

Herstellungsvariante:

In ählicher Weise wie vorstehend beschrieben, kann man auch zuerst das aminogruppenhaltige Chromophor in Tabelle 1, Spalte 3, mit dem Triazin umsetzen und das erhaltene Kondensationsprodukt dem in Spalte 2 angegebenen Zwischenprodukt weiter kondensieren.

| Nr. | Zwischenprodukt | Chromophor | Farbton auf Baumwolle |
|---|---|---|---|
| 1 | 1-Amino-5-(4-(β-chloräthyl-sulfonyl)-butyrylamino)-benzol-2-sulfonsäure | 2-Aminonaphthalin-3,6,8-trisulfonsäure → 1-Amino-3-acetylaminobenzol | rotstichig gelb |
| 2 | do. | 2-Aminonaphthalin-3,6,8-trisulfonsäure → 3-Amino-phenylharnstoff | do. |
| 3 | do. | 1-Amino-3-acetylaminobenzol-6-sulfonsäure → 1-Aethyl-3-sulfomethyl-4-methyl-6-hydroxypyridon-(2)-5-carbonsäureamid, verseift | gelb |
| 4 | do. | 1-Amino-3-acetylaminobenzol-6-sulfonsäure → 1-Aethyl-3-aminocarbonyl-4-methyl-6-hydroxy-pyridon-(2), verseift | do. |
| 5 | do. | 2-Aminonaphthalin-1,5-disulfonsäure → 2-Acetyl-amino-5-hydroxynaphthalin-7-sulfonsäure, verseift | orange |
| 6 | do. | 2-Aminonaphthalin-3,6,8-trisulfonsäure → 2-Acetylamino-5-hydroxynaphthalin-7-sulfonsäure, verseift | do. |

Fortsetzung Tabelle 1

| Nr. | Zwischenprodukt | Chromophor | Farbton auf Baumwolle |
|---|---|---|---|
| 7 | 1-Amino-5-(4-(β-chloräthylsulfonyl)-butyrylamino)-benzol-2-sulfonsäure | 1-Amino-4-methoxybenzol-2-sulfonsäure → 2-Amino-5-hydroxynaphthalin-7-sulfonsäure | scharlach |
| 8 | do. | 1-Amino-4-methoxybenzol-2-sulfonsäure → 2-Methylamino-5-hydroxynaphthalin-7-sulfonsäure | do. |
| 9 | do. | 1-Amino-3-acetylaminobenzol-6-sulfonsäure → 1-Benzoylamino-8-hydroxynaphthalin-3,6-disulfonsäure, verseift | blaustichig rot |
| 10 | do. | 1-Amino-4-acetylaminobenzol-2-sulfonsäure → saure 2-Amino-8-hydroxynaphthalin-6-sulfonsäure, verseift | do. |
| 11 | do. | 1-Amino-3-acetylaminobenzol-6-sulfonsäure → 1-Amino-8-hydroxy-2-(4'-sulfophenylazo)-naphthalin-3,6-disulfonsäure, verseift | blau |
| 12 | do. | 1-Amino-3-acetylaminobenzol-6-sulfonsäure → 1-Amino-8-hydroxy-2-(2',5'-disulfophenylazo)-naphthalin-3,6-disulfonsäure, verseift | do. |
| 13 | do. | N-(2-Hydroxy-3,5-disulfophenyl)-N'-(2'-carboxy-4'-aminophenyl)-ms-phenylformazan, Cu-komplex | do. |
| 14 | do. | N-(2-Carboxy-5-sulfophenyl)-N'-(2'-hydroxy-3'-amino-5'-sulfophenyl)-ms-phenylformazan, Cu-Komplex | do. |

| Nr. | Zwischenprodukt | Chromophor | Farbton auf Baumwolle |
|---|---|---|---|
| 15 | 1-Amino-5-(4-(β-chloräthyl)-sulfonyl)-butyrylamino)-benzol-2-sulfonsäure | 1/2 Aequivalent 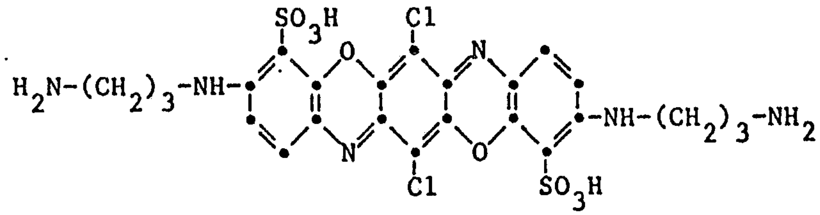 | blau |
| 16 | do. | 1/2 Aequivalent 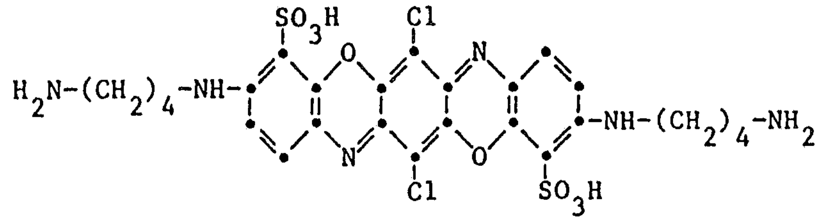 | do. |
| 17 | do. | 0,8 Aequivalent 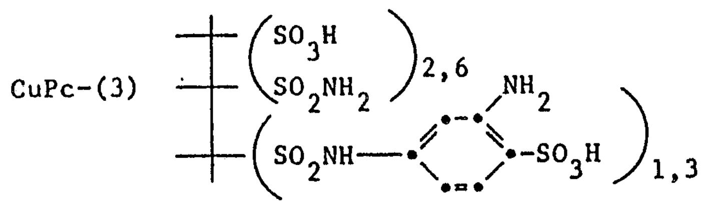 | türkisblau |
| 18 | do. | 1/2 Aequivalent 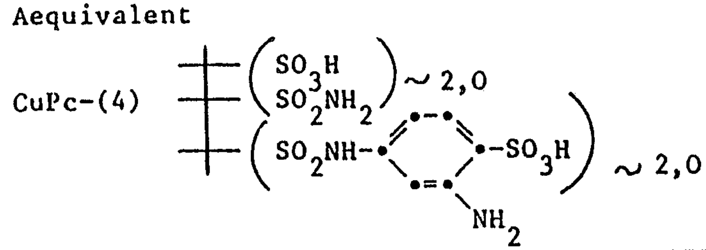 | do. |

| Nr. | Zwischenprodukt | Chromophor | Farbton auf Baumwolle |
|---|---|---|---|
| 19 | 1-Amino-4-(4-(β-chloräthyl-sulfonyl)-butyrylamino)-benzol-2,5-disulfonsäure | 2-Aminonaphthalin-3,6,8-trisulfonsäure → 1-Amino-3-acetylaminobenzol | rotstichig gelb |
| 20 | do. | 2-Aminonaphthalin-3,6,8-trisulfonsäure → 3-Amino-phenylharnstoff | do. |
| 21 | do. | 1-Amino-3-acetylaminobenzol-6-sulfonsäure → 1-Aethyl-3-sulfomethyl-4-methyl-6-hydroxy-pyridon-(2)-5-carbonsäureamid, verseift | gelb |
| 22 | do. | 1-Amino-3-acetylaminobenzol-6-sulfonsäure → 1-Aethyl-3-aminocarbonyl-4-methyl-6-hydroxy-pyridon-(2), verseift | do. |
| 23 | do. | 2-Aminonaphthalin-1,5-disulfonsäure → 2-Acetyl-amino-5-hydroxynaphthalin-7-sulfonsäure, verseift | orange |
| 24 | do. | 2-Aminonaphthalin-3,6,8-trisulfonsäure → 2-Acetylamino-5-hydroxynaphthalin-7-sulfonsäure, verseift | do. |
| 25 | do. | 1-Amino-4-methoxybenzol-2-sulfonsäure → 2-Amino-5-hydroxynaphthalin-7-sulfonsäure | scharlach |
| 26 | do. | 1-Amino-4-methoxybenzol-2-sulfonsäure → 2-Methyl-amino-5-hydroxynaphthalin-7-sulfonsäure | do. |
| 27 | do. | 1-Amino-3-acetylaminobenzol-6-sulfonsäure → 1-Benzoylamino-8-hydroxynaphthalin-3,6-disul-fonsäure, verseift | blaustichig rot |

| Nr. | Zwischenprodukt | Chromophor | Farbton auf Baumwolle |
|---|---|---|---|
| 28 | 1-Amino-4-(4-(β-chloräthyl-sulfonyl)-butyrylamino)-benzol-2,5-disulfonsäure | 1-Amino-4-acetylaminobenzol-2-sulfonsäure → saure 2-Amino-8-hydroxynaphthalin-6-sulfonsäure, verseift | blaustichig rot |
| 29 | do. | 1-Amino-3-acetylaminobenzol-6-sulfonsäure → 1-Amino-8-hydroxy-2-(4'-sulfophenylazo)-naphthalin-3,6-disulfonsäure, verseift | blau |
| 30 | do. | 1-Amino-3-acetylaminobenzol-6-sulfonsäure → 1-Amino-8-hydroxy-2-(2',5'-disulfophenylazo)-naphthalin-3,6-disulfonsäure, verseift | do. |
| 31 | do. | N-(2-Hydroxy-3,5-disulfophenyl)-N'-(2'-carboxy-4'-aminophenyl)-ms-phenylformazan, Cu-Komplex | do. |
| 32 | do. | N-(2-Carboxy-4-sulfophenyl)-N'-(2'-hydroxy-3'-amino-5'-sulfophenyl)-ms-phenylformazan, Cu-Komplex | do. |
| 33 | do. | 1/2 Aequivalent 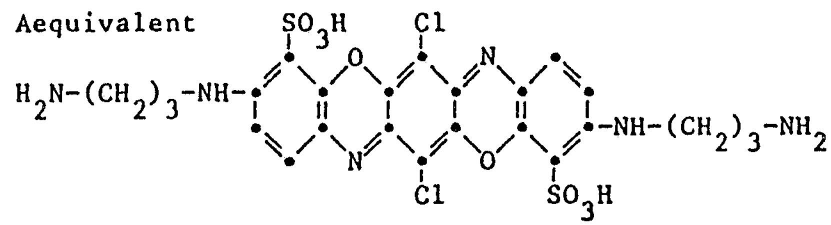 | do. |
| 34 | do. | 1/2 Aequivalent 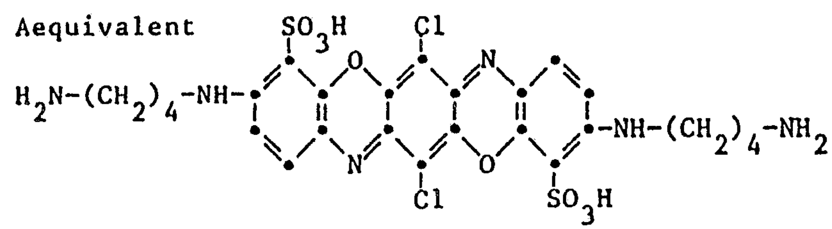 | do. |

| Nr. | Zwischenprodukt | Chromophor | Farbton auf Baumwolle |
|---|---|---|---|
| 35 | 1-Amino-4-(4-(β-chloräthyl-sulfonyl)-butyrylamino)-benzol-2,5-disulfonsäure | 0,8 Aequivalent 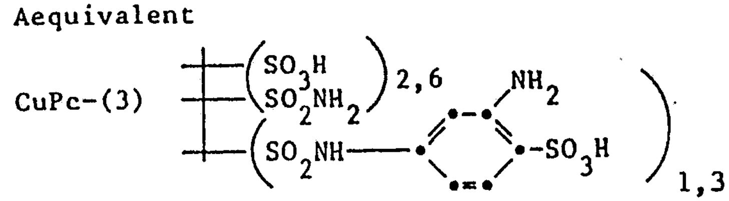 | türkisblau |
| 36 | do. | 1/2 Aequivalent 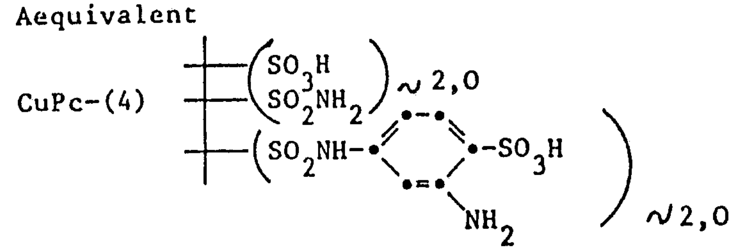 | do. |
| 37 | 1-Amino-4-(4-vinylsulfonyl-butyrylamino)-benzol-2,5-disulfonsäure | 2-Aminonaphthalin-3,6,8-trisulfonsäure → 1-Amino-3-acetylaminobenzol | rotstichig gelb |
| 38 | do. | 2-Aminonaphthalin-3,6,8-trisulfonsäure → 3-Amino-phenylharnstoff | do. |
| 39 | do. | 1-Amino-3-acetylaminobenzol-6-sulfonsäure → 1-Aethyl-3-sulfomethyl-4-methyl-6-hydroxypyridon-(2)-5-carbonsäureamid, verseift | gelb |
| 40 | do. | 1-Amino-3-acetylaminobenzol-6-sulfonsäure → 1-Aethyl-3-aminocarbonyl-4-methyl-6-hydroxypyridon-(2), verseift | do. |
| 41 | do. | 2-Aminonaphthalin-1,5-disulfonsäure → 2-Acetyl-amino-5-hydroxynaphthalin-7-sulfonsäure, verseift | orange |

| Nr. | Zwischenprodukt | Chromophor | Farbton auf Baumwolle |
|---|---|---|---|
| 42 | 1-Amino-4-(4-vinylsulfonyl-butyrylamino)-benzol-2,5-disulfonsäure | 2-Aminonaphthalin-3,6,8-trisulfonsäure → 2-Acetyl-amino-5-hydroxynaphthalin-7-sulfonsäure, verseift | orange |
| 43 | do. | 1-Amino-4-methoxybenzol-2-sulfonsäure → 2-Amino-5-hydroxynaphthalin-7-sulfonsäure | scharlach |
| 44 | do. | 1-Amino-4-methoxybenzol-2-sulfonsäure → 2-Methyl-amino-5-hydroxynaphthalin-7-sulfonsäure | do. |
| 45 | do. | 1-Amino-3-acetylaminobenzol-6-sulfonsäure → 1-Benzoylamino-8-hydroxynaphthalin-3,6-disulfonsäure, verseift | blaustichig rot |
| 46 | do. | 1-Amino-4-acetylaminobenzol-2-sulfonsäure → saure 2-Amino-8-hydroxynaphthalin-6-sulfonsäure, verseift | do. |
| 47 | do. | 1-Amino-3-acetylaminobenzol-6-sulfonsäure → 1-Amino-8-hydroxy-2-(4'-sulfophenylazo)-naphthalin-3,6-disulfonsäure, verseift | blau |
| 48 | do. | 1-Amino-3-acetylaminobenzol-6-sulfonsäure → 1-Amino-8-hydroxy-2-(2',5'-disulfophenylazo)-naphthalin-3,6-disulfonsäure, verseift | do. |
| 49 | do. | N-(2-Hydroxy-3,5-disulfophenyl)-N'-(2'-carboxy-4'-aminophenyl)-ms-phenylformazan, Cu-Komplex | do. |
| 50 | do. | N-(2-Carboxy-5-sulfophenyl)-N'-(2'-hydroxy-3'-amino-5'-sulfophenyl)-ms-phenylformazan, Cu-Komplex | do. |

| Nr. | Zwischenprodukt | Chromophor | Farbton auf Baumwolle |
|---|---|---|---|
| 51 | 1-Amino-4-(4-vinylsulfonyl-butyrylamino)-benzol-2,5-disulfonsäure | 1/2 Aequivalent 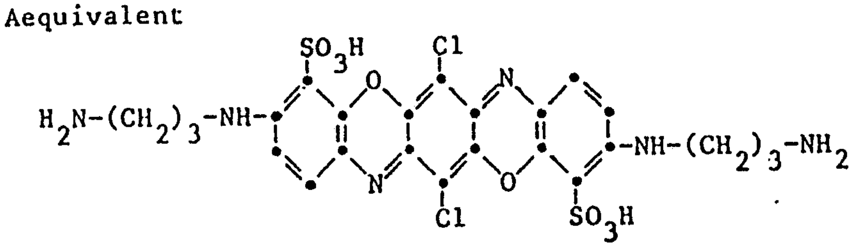 | blau |
| 52 | do. | 1/2 Aequivalent 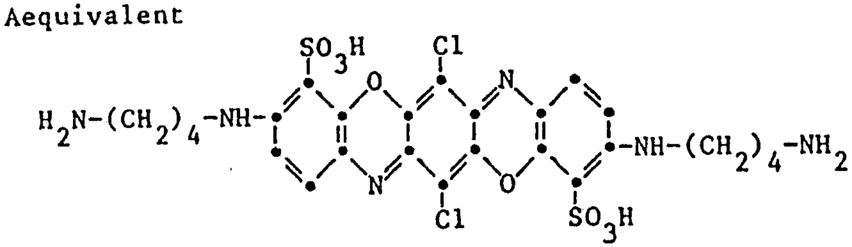 | do. |
| 53 | do. | 0,8 Aequivalent CuPc-(3) 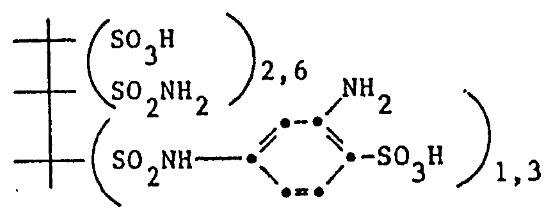 | türkisblau |
| 54 | do. | 1/2 Aequivalent CuPc-(4) 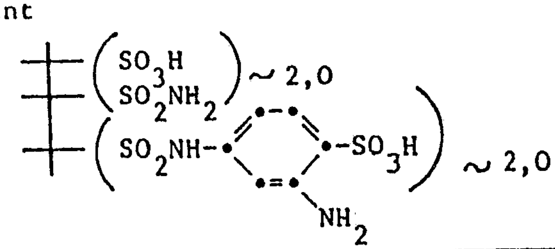 | do. |

Allgemeines Herstellungsverfahren II 16,4 Teile des Farbstoffes de Formel

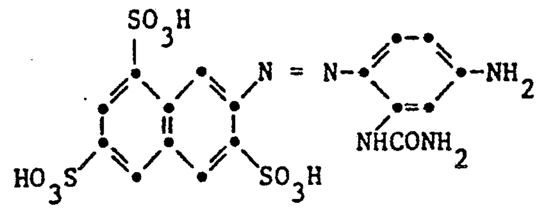

werden gemäss den Angaben in Beispiel 1 mit 4,3 Teilen 2,4,6-Trifluor-1,3,5-triazin bei 0 bis 5° umgesetzt. Nach Zusatz einer neutralen Lösung von 5,9 Teilen 1,3-Diaminobenzol-4-sulfonsäure in 100 ml Wasser wird die Temperatur innert 2 bis 3 Stunden auf 20 bis 25° erhöht und dabei der pH der Reaktionsmischung durch ständige Zugabe von 2n Natriumhydroxydlösung bei 6,0 gehalten. Nach vollständiger Reaktion wird die Reaktionsmischung geklärt und das gebildete Zwischenprodukt bei pH 7,0 durch Einstreuen von Kaliumchlorid ausgesalzen, filtriert, gewaschen und im Vakuum getrocknet.

14,6 Teile des so erhaltenen Zwischenproduktes, das noch eine acylierbare Aminogruppe trägt, werden in 200 ml Wasser gelöst. Bei 10° werden 4,8 Teile 2,3-Dibrompropionylchlorid innert 10 Minuten zugetropft, wobei der pH der Reaktionsmischung durch gleichzeitige Zugabe von 2n Natriumhydroxydlösung bei 7,0 bis 7,5 gehalten wird. Nach vollständiger Reaktion wird der gebildete Reaktivfarbstoff der Formel (Vergleichsverbindung)

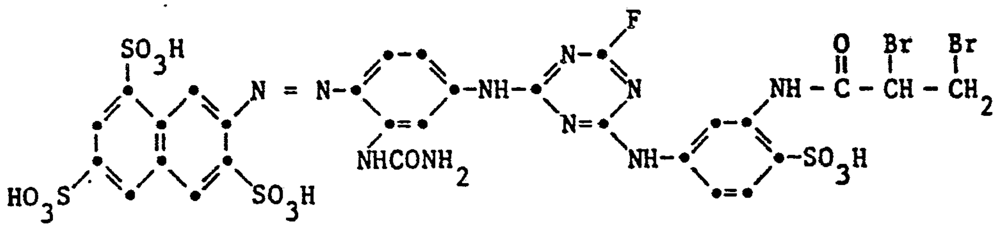

bei pH 7,0 durch Einstreuen von Kaliumchlorid ausgesalzen, filtriert, gewaschen und im Vakuum getrocknet. Er färbt Baumwolle in rotstichigen Gelbtönen.

Kondensiert man die 16,4 Teile des der oberen Formel in Beispiel 2 entsprechenden Farbstoffes statt mit 4,3 Teilen, 2,4,6-Trifluor-1,3,5-triazin mit 5,8 Teilen, 2,4,6-Trichlor-1,3,5-triazin und verfährt weiter wie in Beispiel 2 beschrieben, erhält man einen weiteren wertvollen Reaktivfarbstoff der Formel (Vergleichsverbindung zur Veranschanlichung des Verfahrens):

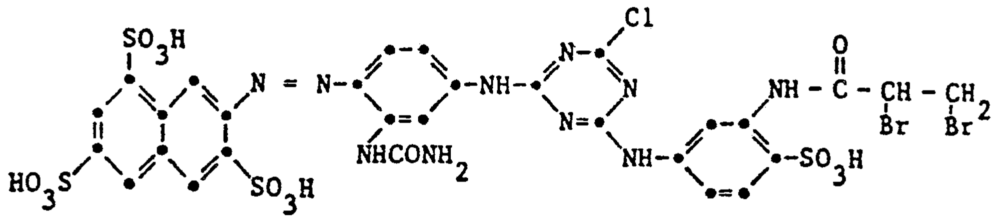

Er färbt Baumwolle in rotstichigen Gelbtönen.

Weitere Reaktivfarbstoffe, die Baumwolle in den in Tabelle 2, Spalte 5, anegegeben Farbtönen färben, werden erhalten, wenn man die in Spalte 2 angegebenen aminogruppenhaltigen Chromophore gemäss den Angaben in Beispiel 2 zuerst mit 2,4,6-Trifluor-1,3,5-triazin oder mit 2,4,6-Trichlor-1,3,5-triazin und dann mit der in Spalte 3 angegebenen Diaminoverbindung umsetzt. Die so erhaltenen Zwischenprodukte werden durch Umsatz mit dem in Spalte 4 angegebenen Acylierungsmittel gemäss den Angaben in Beispiel 2 in die Reaktivfarbstoffe umgewandelt.

| Nr. | Chromophor | Diamino-Verbindung | Acylierungsmittel | Farbton auf Baumwolle |
|---|---|---|---|---|
| 1 | 2-Aminonaphthalin-3,6,8-trisulfonsäure → 3-Aminophenylharnstoff | 1,4-Diaminobenzol-2-sulfonsäure | 4-(β-Chloräthyl-sulfonyl)-butyryl-chlorid gelöst in Dioxan | rotstichig gelb |
| 2 | 2-Aminonaphthalin-3,6,8-trisulfonsäure → 3-Aminophenylharnstoff | 1,3-Diaminobenzol-4-sulfonsäure | 4-(β-Chloräthyl-sulfonyl)-butyrylchlorid gelöst in Dioxan | rotstichig gelb |
| 3 | N-(2-Hydroxy-3,5-disulfophenyl)-N'-(2'-carboxy-4'-aminophenyl)-ms-(2"-sulfophenyl)-formazan, Cu-Komplex | 1,3-Diaminobenzol-4-sulfonsäure | 4-(β-Chloräthyl-sulfonyl)-butyryl-chlorid | blau |
| 4 | do. | 1,4-Diaminobenzol-2-sulfonsäure | do. | do. |
| 5 | 1-Aminobenzol-2,5-disulfonsäure → 2-Amino-5-hydroxynaphthalin-7-sulfonsäure | 1,3-Diaminobenzol-4-sulfonsäure | do. | scharlach |
| 6 | 1-Amino-4-methoxybenzol-2-sulfonsäure → 2-Amino-5-hydroxynaphthalin-7-sulfonsäure | 1,4-Diaminobenzol-2-sulfonsäure | do. | do. |
| 7 | 2-Aminonaphthalin-1,5-disulfonsäure → 2-Amino-5-hydroxynaphthalin-7-sulfonsäure | do. | do. | orange |

| Nr. | Chromophor | Diamino-Verbindung | Acylierungs-mittel | Farbton auf Baumwolle |
|---|---|---|---|---|
| 8 | 2-Aminonaphthalin-3,6,8-trisulfonsäure → 1-Amino-3-acetylaminobenzol | 1,3-Diaminobenzol-4-sulfonsäure | 4-(β-Chloräthyl sulfonyl)-butyryl-chlorid | rotstichig gelb |
| 9 | 1-Amino-3-acetylaminobenzol-6-sulfonsäure → 1-Aethyl-3-sulfomethyl-4-methyl-6-hydroxypyridon-(2)-5-carbonsäureamid, verseift | do. | do. | gelb |
| 10 | 1-Amino-3-acetylaminobenzol-6-sulfonsäure → 1-Aethyl-3-aminocarbonyl-4-methyl-6-hydroxypyridon-(2), verseift | do. | do. | do. |
| 11 | 2-Aminonaphthalin-1,5-disulfonsäure → 2-Acetylamino-5-hydroxynaphthalin-7-sulfonsäure, verseift | do. | do. | orange |
| 12 | 2-Aminonaphthalin-3,6,8-trisulfonsäure → 2-Acetylamino-5-hydroxynaphthalin-7-sulfonsäure, verseift | do. | do. | do. |
| 13 | 1-Amino-4-methoxybenzol-2-sulfonsäure → 2-Amino-5-hydroxynaphthalin-7-sulfonsäure | do. | do. | scharlach |
| 14 | 1-Amino-4-methoxybenzol-2-sulfonsäure → 2-Methylamino-5-hydroxynaphthalin-7-sulfonsäure | do. | do. | do. |

Fortsetzung Tabelle 2

| Nr. | Chromophor | Diamino-Verbindung | Acylierungsmittel | Farbton auf Baumwolle |
|---|---|---|---|---|
| 15 | 1-Amino-3-acetylaminobenzol-6-sulfonsäure → 1-Benzoylamino-8-hydroxynaphthalin-3,6-disulfonsäure, verseift | 1,3-Diaminobenzol-4-sulfonsäure | 4-(β-Chloräthyl-sulfonyl)-butyryl-chlorid | blaustichig rot |
| 16 | 1-Amino-4-acetylaminobenzol-2-sulfonsäure → saure 2-Amino-8-hydroxynaphthalin-6-sulfonsäure, verseift | do. | do. | do. |
| 17 | 1-Amino-3-acetylaminobenzol-6-sulfonsäure → 1-Amino-8-hydroxy-2-(4'-sulfophenylazo)-naphthalin-3,6-disulfonsäure, verseift | do. | do. | blau |
| 18 | 1-Amino-3-acetylaminobenzol-6-sulfonsäure → 1-Amino-8-hydroxy-2-(2',5'-disulfophenylazo)-naphthalin-3,6-disulfonsäure, verseift | do. | do. | do. |
| 19 | N-(2-Hydroxy-3,5-disulfophenyl)-N'-(2'-carboxy 4'-aminophenyl)-ms-phenylformazan, Cu-Komplex | do. | do. | do. |
| 20 | N-(2-Carboxy-5-sulfophenyl)-N'-(2'-hydroxy-3'-amino-5'-sulfophenyl)-ms-phenylformazan, Cu-Komplex | do. | do. | do. |

| Nr. | Chromophor | Diamino-Verbindung | Acylierungsmittel | Farbton auf Baumwolle |
|---|---|---|---|---|
| 21 | 1/2 Aequivalent 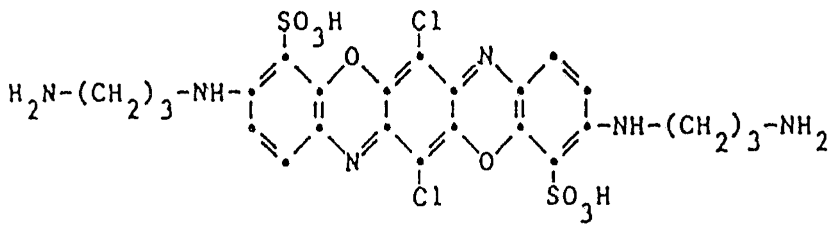 | 1,3-Diaminobenzol-4-sulfonsäure | 4-(β-Chloräthylsulfonyl)-butyrylchlorid | blau |
| 22 | 1/2 Aequivalent 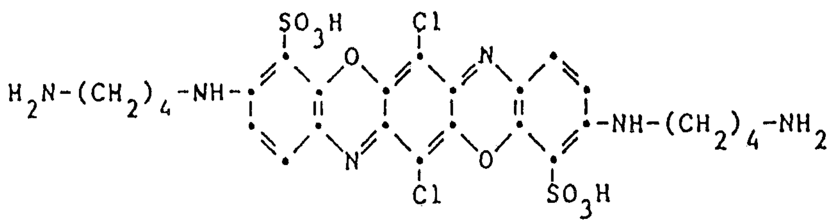 | do. | do. | do. |
| 23 | 0,8 Aequivalent 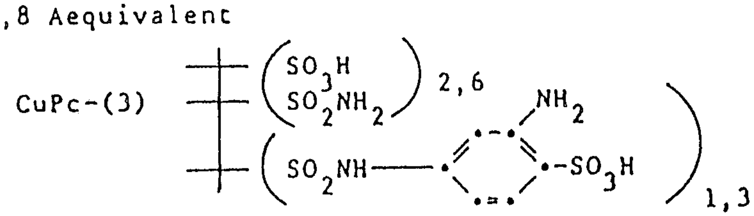 | do. | do. | türkisblau |
| 24 | 1/2 Aequivalent 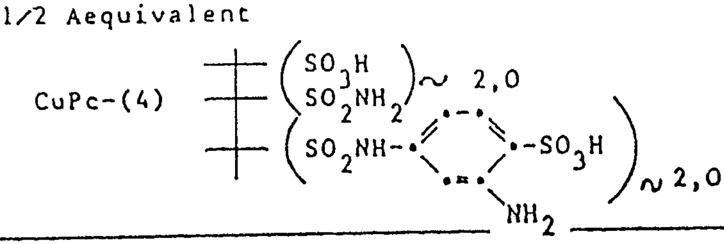 | do. | do. | do. |

Färbevorschrift I

2 Teile des gemäss Beispiel 1 erhaltenen Farbstoffes werden in 400 Teilen Wasser gelöst; dazu gibt man 1500 Teile einer Lösung, die pro Liter 53 g Natriumchlorid enthält. In dieses Färbebad geht man bei 40° mit 100 Teilen eines Baumwollgewebes ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40° gehalten. Danach wird die gefärbte Ware gespült, während einer Viertelstunde mit einem nichtionogenen Waschmittel kochend geseift, nochmals gespült und getrocknet.

Färbevorschrift II

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 35° mit 100 Teilen eines Baumwollgewebes ein. Nach 20 Minuten werden 100 Teile einer Lösung, die pro Liter 16 g Natriumhydroxyd und 20 g kalziniertes Soda enthält, zugegeben. Die Temperatur des Färbebades wird weitere 15 Minuten bei 35° gehalten. Danach wird die Temperatur innerhalb 20 Minuten auf 60° erhöht. Die Temperatur wird weitere 35 Minuten bei 60° gehalten. Danach wird gespült, während einer Viertelstunde mit einem nichtionogenen Waschmittel kochend geseift, nochmals gespült und getrocknet.

Färbevorschrift III

8 Teile des gemäss Beispiel 1 erhaltenen Reaktivfarbstoffes werden in 400 Teilen Wasser gelöst; dazu gibt man 1400 Teile einer Lösung, die pro Liter 100 g Natriumsulfat enthält. In dieses Färbebad geht man bei 25° mit 100 Teilen eines Baumwollgewebes ein. Nach 10 Minuten werden 200 Teile einer Lösung, die pro Liter 150 g Trinatriumphosphat enthält, zugegeben. Danach wird die Temperatur des Färbebades innerhalb 10 Minuten auf 60° erhöht. Die Temperatur wird weitere 90 Minuten auf 60° gehalten. Danach wird gespült, während einer Viertelstunde mit einem nichtionogenen Waschmittel kochend geseift, nochmals gespült und getrocknet.

Färbevorschrift IV

4 Teile des gemäss Beispiel 1 erhaltenen Reaktivfarbstoffes werden in 50 Teilen Wasser gelöst. Dazu gibt man 50 Teile einer Lösung, die pro Liter 5 g Natriumhydroxyd und 20 g kalziniertes Soda enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift V

6 Teile des gemäss Beispiel 1 erhaltenen Reaktivfarbstoffes werden in 50 Teilen Wasser gelöst. Dazu gibt man 50 Teile einer Lösung, die pro Liter 16 g Natriumhydroxyd und 0,04 Liter Wasserglas (38° Bé) enthält. Mit der erhaltenen Lösung wird ein Baumwollgewebe foulardiert, so dass es um 70% seines Gewichtes zunimmt, und dann auf eine Kaule aufgewickelt. Das Baumwollgewebe wird so während 20 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift VI

2 Teile des gemäss Beispiel 1 erhaltenen Reaktivfarbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichts zunimmt, und dann getrocknet. Dann imprägniert man das Gewebe mit einer 20° warmen Lösung, die pro Liter 4 g Natriumhydroxyd und 300 g Natriumchlorid enthält, quetscht auf 75% Gewichtszunahme ab, dämpft die Färbung während 30 bis 60 Sekunden bei 100 bis 102°, spült, seift während einer Viertelstunde in einer 0,3%igen kochenden Lösung eines nichtionogenen Waschmittels, spült und trocknet.

Druckvorschrift I

3 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102° in gesättigtem Dampf. Das bedruckte Gewebe wird dann gespült, gegebenenfalls kochend geseift und nochmals gespült, und anschliessend getrocknet.

Druckvorschrift II

5 Teile des gemäss Beispiel 1 erhaltenen Reaktivfarbstoffes werden unter schnellem Rühren in 100 Teile einer Stammverdickung, enthaltend 50 Teile 5%ige Natriumalginatverdickung, 36,5 Teile Wasser, 10 Teile Harnstoff, 1 Teil m-nitrobenzolsulfonfsaures Natrium sowie 2,5 Teile Natriumhydrogencarbonat, eingestreut. Mit der so erhaltenen Druckpaste, deren Stabilität den technischen Anforderungen entspricht,

bedruckt man ein Baumwollgewebe, trocknet und dämpft den erhaltenen bedruckten Stoff 8 Minuten bei 102° in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

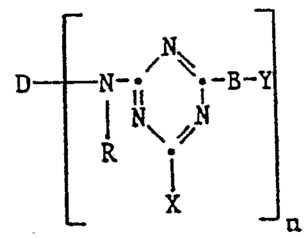

(1) ,

worin D der Rest eines organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthron-, Nitroaryl-, Naphthochinon-, Pyrenchinon- oder Perylentetracarbimid-Reihe, R Wasserstoff oder gegebenenfalls durch Halogen, Hydroxy, Cyano, Carboxy, Sulfo oder $C_1$—$C_4$-Alkoxy substituiertes $C_1$—$C_4$-Alkyl, X Halogen, niedrigmolekulares Alkylsulfonyl, eine Sulfonsäure- oder Phosphonsäuregruppe oder der Phenylsulfonylrest, B ein Rest der Formel

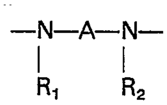

(1c),

$R_1$ und $R_2$ unabhängig voneinander Wasserstoff, gegebenenfalls durch Halogen, Hydroxy, Cyano, Carboxy, Sulfo oder $C_1$—$C_4$-Alkoxy substituiertes $C_1$—$C_4$-Alkyl oder gegebenenfalls durch Halogen, Carboxyl, Sulfo, $C_1$—$C_4$-Alkyl oder $C_1$—$C_4$-Alkoxy substituiertes Phenyl,
A ein gegebenenfalls durch Halogen, $C_1$—$C_4$-Alkyl, $C_1$—$C_4$-Alkoxy, Carboxy und/oder Sulfo substituierter $C_2$—$C_6$-Alkylen-, Phenylen-, oder Naphthylenrest oder der Rest eines Diphenyls oder Stilbens, Y der 4-Vinylsulfonylbutyryl- oder 4-(β-Chloräthylsulfonyl)-butyrylrest und n = 1 oder 2 ist.

2. Reaktivfarbstoffe gemäss Anspruch 1, worin X Fluor oder Chlor ist.

3. Reaktivfarbstoffe gemäss Anspruch 2, worin B ein Rest der Formel (1c), und A sulfophenylen ist.

4. Reaktivfarbstoffe gemäss einem der Ansprüche 1 bis 3, worin D der Rest eines Mono- oder Disazofarbstoffes ist.

5. Reaktivfarbstoffe gemäss einem der Ansprüche 1 bis 3, worin D der Rest eines Metallkomplexazo- oder Formazanfarbstoffes ist.

6. Reaktivfarbstoffe gemäss einem der Ansprüche 1 bis 3, worin D der Rest eines Anthrachinonfarbstoffes ist.

7. Reaktivfarbstoffe gemäss Anspruch 5, worin D der Rest eines 1:1-Kuperkomplexazofarbstoffes der Benzol- oder Naphthalinreihe ist und das Kupferatom an je eine metallisierbare Gruppe beidseitig in ortho-Stellung zur Azobrücke gebunden ist.

8. Reaktivfarbstoffe gemäss Anspruch 4, der Formel

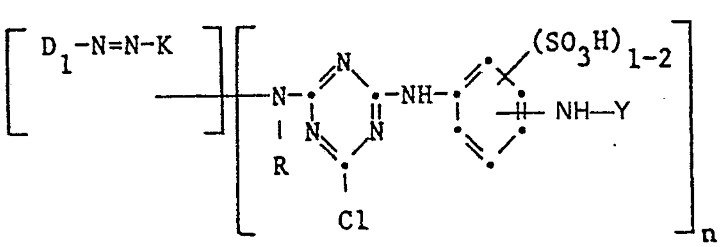

(2) ,

worin $D_1$ der Rest einer Diazokomponente der Benzol- oder Naphthalin- reihe, K der Rest einer Kupplungskomponente der Benzol- oder Naphthalinreihe oder der heterocyclischen Reihe, R Wasserstoff, Methyl oder Aethyl, und n = 1 oder 2 ist, Y die im Anspruch 1 angegebene Bedeutung hat, und der Reaktivrest an die Diazokomponente oder an die Kupplungskomponente gebunden ist, oder je ein Reaktivrest an die

Diazokomponente und an die Kupplungskomponente gebunden ist.

9. Reaktivfarbstoffe gemäss Anspruch 4, der Formel

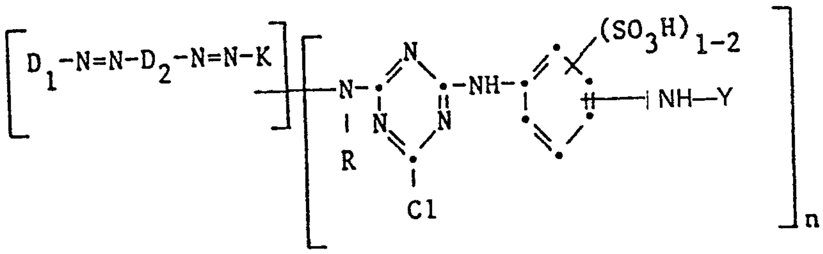

(3) ,

worin $D_1$ und $D_2$ je ein Rest einer Diazokomponente der Benzol- oder Naphthalinreihe, K der Rest einer Kupplungskomponente der Benzol- oder Naphthalinreihe oder der heterocyclischen Reihe, R Wasserstoff, Methyl oder Aethyl, und n = 1 oder 2 ist, Y die im Anspruch 1 angegebene Bedeutung hat, und der Reaktivrest an die Diazokomponente $D_1$ oder an die Kupplungskomponente K gebunden ist, oder je ein Reaktivrest an $D_1$ und K gebunden ist.

10. Reaktivfarbstoffe gemäss Anspruch 4, der Formel

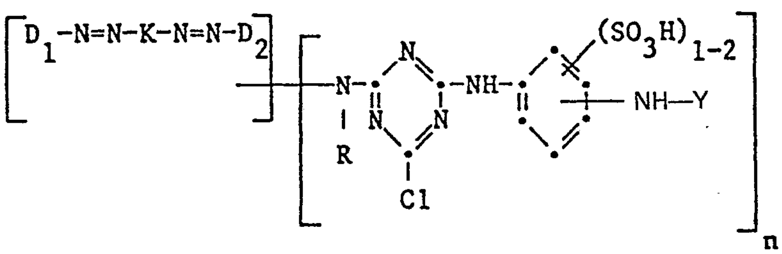

(4) ,

worin $D_1$ und $D_2$ je ein Rest einer Diazokomponente der Benzol- oder Naphthalinreihe, K der Rest einer Kupplungskomponente der Amino- naphtholsulfonsäure-Reihe, R Wasserstoff, Methyl oder Aethyl, und n = 1 oder 2 ist, Y die im Anspruch 1 angegebene Bedeutung hat, und der Reaktivrest an die Diazokomponente $D_1$ oder an die Diazokomponente $D_2$ gebunden ist oder je ein Reaktivrest an $D_1$ und $D_2$ gebunden ist.

11. 1:1-Kuperkomplexe von Reaktivfarbstoffen gemäss den Ansprüchen 8 bis 10.

12. Verfahren zur Herstellung von Reaktivfarbstoffen gemäss Anspruch 1, dadurch gekennzeichnet, dass man organische Farbstoffe der Formel

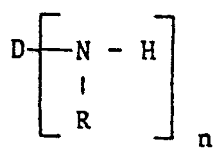

(5)

oder Farbstoffvorprodukte, mindestens ein Aequivalent eines Triazins der Formel

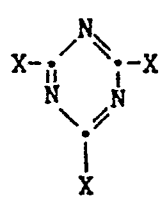

(6) ,

mindestens ein Aequivalent einer Verbindung der Formel

$$H—B—H \qquad (7)$$

und mindestens ein Aequivalent eines den Rest Y einführenden Mittels in beliebiger Folge zu einem Reaktivfarbstoff der Formel (1) kondensiert, wobei D, R, n, X, und B in den Formeln (5) bis (7), sowie Y die in Anspruch 1 angegebenen Bedeutungen haben, und dass man im Falle der Verwendung von Farbstoffvorprodukten, diese in die gewünschten Endfarbstoffe umwandelt.

13. Verwendung der Reaktivfarbstoffe gemäss Anspruch 1 zum Färben oder Bedrucken.

14. Verwendung gemäss Anspruch 13, zum Färben oder Bedrucken von Cellulosefasern.

**Revendications**

1. Colorants réactifs de formule

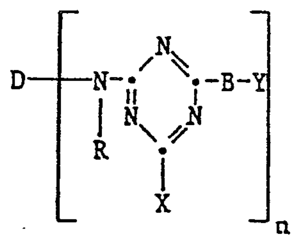

(1) ,

dans laquelle D est le reste d'un colorant organique de l'une des séries suivantes: mono- ou polyazoïque, azoïque à complexe métallique anthraquinone, phtalocyanine, formazan, azométhine, dioxazine, phénazine, stilbène, triphénylméthane, xanthène, thioxanthrone, nitroaryle, naphtoquinone, pyrènequinone ou pérylènetétracarbimide, R est un atome d'hydrogène ou un groupe alkyle en $C_1$—$C_4$, éventuellement substitué par un halogène ou par un groupe hydroxy, cyano, carboxy, sulfo ou alkoxy en $C_1$—$C_4$, X est un halogène, une groupe alkylsulfonyle inférieur, un groupe acide sulfonique ou phosphonique, ou le reste phénylsulfonyle, B est un reste de formule

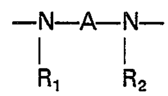

(1c),

dans laquelle $R_1$ et $R_2$ sont, indépendamment l'une de l'autre, un atome d'hydrogène, un groupe alkyle en $C_1$—$C_4$, éventuellement substitué par un halogène ou par un groupe hydroxy, cyano, carboxy, sulfo ou alkoxy en $C_1$—$C_4$, ou un groupe phényle éventuellement substitué par un halogène ou par un groupe carboxy, sulfo, alkyle en $C_1$—$C_4$ ou alkoxy en $C_1$—$C_4$, A est un reste alkylène en $C_2$—$C_6$, phénylène ou naphtylène, éventuellement substitué par un halogène ou par un groupe alkyle en $C_1$—$C_4$, alkoxy en $C_1$—$C_4$, carboxy et/ou sulfo, ou le reste d'un diphényle ou d'un stilbène, Y est le reste 4-vinylsulfonylbutyryle ou 4-(β-chloroéthylsulfonyl)butyryle, et n = 1 ou 2.

2. Colorants réactifs de la revendication 1, dans lesquels X est le chlore ou le fluor.

3. Colorants réactifs de la revendication 2, dans lesquels B est un reste de formule (1c), et A est un groupe sulfophénylène.

4. Colorants réactifs de l'une quelconque des revendications 1 à 3, dans lesquels D est le reste d'un colorant mono- ou diazoïque.

5. Colorants réactifs de l'une quelconque des revendications 1 à 3, dans lesquels D est le reste d'un colorant azoïque à complexe métallique ou formazan.

6. Colorants réactifs de l'une quelconque des revendications 1 à 3, dans lesquels D est le reste d'un colorant anthraquinone.

7. Colorants réactifs de la revendication 5, dans lesquels D est le reste d'un colorant azoïque à complexe de cuivre 1:1 de la série du benzène ou du naphtalène, et l'atome de cuivre est lié à chacun de deux groupes métallables situés des deux côtés en position ortho par rapport au pont azo.

8. Colorants réactifs de la revendication 4, de formule

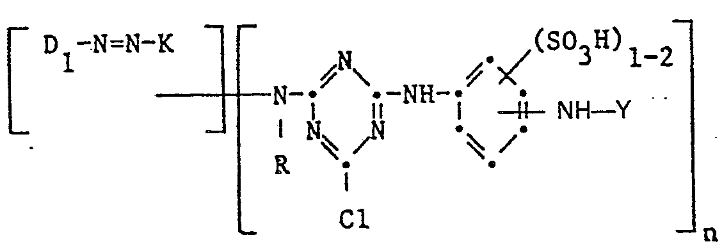

(2) ,

dans laquelle $D_1$ est le reste d'un composant diazo de la série du benzène ou du naphtalène, K est le reste d'un copulant de la série du benzène ou du naphtalène ou de la série hétérocyclique, R est un atome d'hydrogène ou un groupe méthyle ou éthyle, et n = 1 ou 2, Y a la signification indiquée dans la revendication 1, et le reste réactif est lié au composant diazo ou au copulant, ou encore deux restes réactifs

sont liés, l'un au composant diazo et l'autre au copulant.

9. Colorants réactifs de la revendication 4, de formule

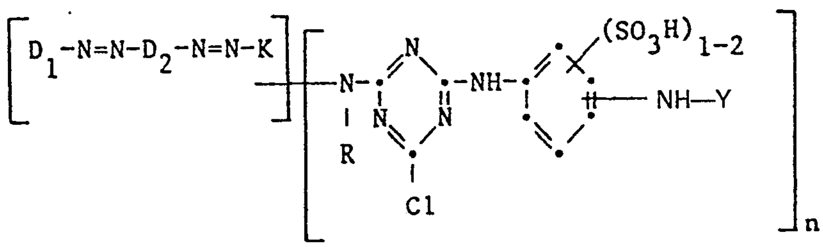

(3) ,

dans laquelle $D_1$ et $D_2$ sont chacun un reste d'un composant diazo de la série du benzène ou du naphtaléne, K est le reste d'un copulant de la série du benzène ou du naphtalène ou de la série hétérocyclique, R est un atome d'hydrogène ou un groupe méthyle ou éthyle, et n = 1 ou 2, Y a la signification indiquée dans la revendication 1, et le reste réactif est lié au composant diazo $D_1$ ou au copulant K, ou encore deux restes réactifs sont liés, l'un à $D_1$ et l'autre à K.

10. Colorants réactifs de la revendication 4, de formule

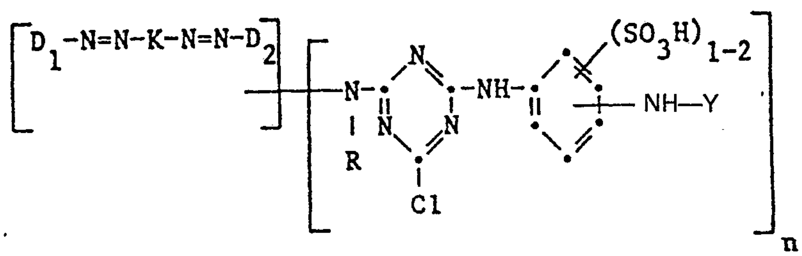

(4) ,

dans laquelle $D_1$ et $D_2$ sont chacun un reste d'un composant diazo de la série du benzène ou du naphtalène, K est le reste d'un copulant de la série de l'acide aminonaphtolsulfonique, R est un atome d'hydrogène ou un groupe méthyle ou éthyle, et n = 1 ou 2, Y a la signification indiquée dans la revendication 1, et le reste réactifs est lié au composant diazo $D_1$ ou un composant diazo $D_2$, ou encore deux restes réactifs sont liés, l'un à $D_1$ et l'autre à $D_2$.

11. Complexes de cuivre 1:1 de colorants réactifs de l'une quelconque des revendications 8 à 10.

12. Procédé de préparation des colorants réactifs de la revendication 1, caractérisé en ce que l'on condense, dans un ordre quelconque, des colorants organiques de formule

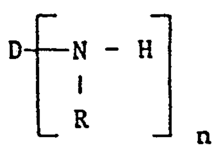

(5)

ou des précurseurs de colorants, au moins un équivalent d'une triazine de formule

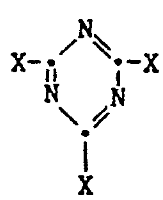

(6) ,

au moins un équivalent d'un composé de formule

H—B—H (7)

et au moins un équivalent d'un agent d'introduction du reste Y, pour obtenir un colorant réactif de formule (1), D, R, n, X et B des formules (5) à (7), ainsi que Y, ayant les significations indiquées dans la revendication

1, et en ce que, dans le cas où l'on utilise des précurseurs de colorants, on transforme ces derniers en les colorants finaux souhaités.

13. Utilisation des colorants réactifs de la revendication 1 pour la teinture ou l'impression.

14. Utilisation selon la revendication 13, pour la teinture ou l'impression de fibres de cellulose.

**Claims**

1. A reactive dye of the formula

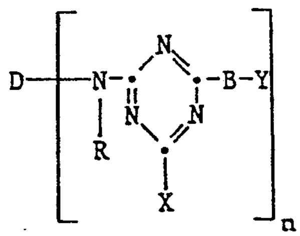

(1) ,

in which D is the radical of an organic dye of the monoazo, polyazo, metal complex azo, anthraquinone, phthalocyanine, formazan, azomethine, dioxazine, phenazine, stilbene, triphenylmethane, xanthene, thioxanthrone, nitroaryl, naphthoquinone, pyrenequinone or perylenetetracarbimide series, R is hydrogen or unsubstituted or halogen-, hydroxyl-, cyano-, carboxyl-, sulfo- or $C_1$—$C_4$alkoxy-substituted $C_1$—$C_4$alkyl, X is halogen, low molecular weight alkylsulfonyl, sulfo, phosphono or phenylsulfonyl, B is a radical of the formula

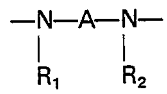

(1c),

$R_1$ and $R_2$ are independently of each other hydrogen, unsubstituted or halogen-, hydroxyl-, cyano-, carboxyl-, sulfo- or $C_1$—$C_4$alkoxy-substituted $C_1$—$C_4$alkyl or unsubstituted or halogen-, carboxyl-, sulfo-, $C_1$—$C_4$alkyl or $C_1$—$C_4$alkoxy-substituted phenyl, A is unsubstituted or halogen-, $C_1$—$C_4$alkyl-, $C_1$—$C_4$alkoxy-, carboxyl-, and/or sulfo-substituted $C_2$—$C_6$alkylene, phenylene or naphthylene or the radical of a biphenyl or the stilbene, Y is vinylsulfonylbutyryl or 4-(β-chloroethylsulfonyl) butyryl, and n is 1 or 2.

2. A reactive dye according to claim 1, in which X is fluorine or chlorine.

3. A reactive dye according to claim 2, in which B is a radical of the formula (Ic) and A is sulfophenylene.

4. A reactive dye according to any one of claims 1 to 3, in which D is the radical of a monoazo or disazo dye.

5. A reactive dye according to any one of claims 1 to 3, in which D is the radical of a metal complex azo or formazan dye.

6. A reactive dye according to any one of claims 1 to 3, in which D is the radical of an anthraquinone dye.

7. A reactive dye according to claim 5, in which D is the radical of a 1:1 copper complex azo dye of the benzene or naphthalene series and the copper atom is bonded to a metallisable group on either side in ortho-position relative to the azo bridge.

8. A reactive dye according to claim 4 of the formula

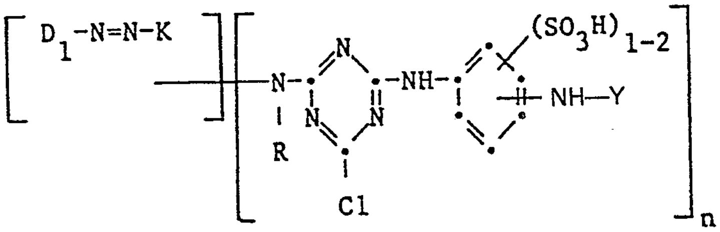

(2) ,

in which $D_1$ is the radical of a diazo component of the benzene or naphthalene series, K is the radical of a coupling component of the benzene or naphthalene series or of the heterocyclic series, R is hydrogen, methyl or ethyl, n is 1 or 2, Y is as defined in claim 1, and the reactive radical is bonded to the diazo component or to the coupling component, or one reactive radical each is bonded to the diazo component

and to the coupling component.

9. A reactive dye according to claim 4, of the formula

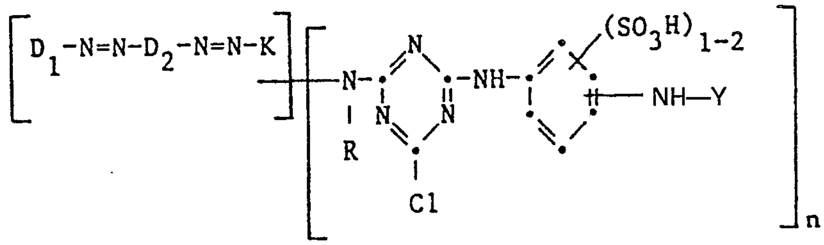

(3) ,

in which $D_1$ and $D_2$ are each a radical of a diazo component of the benzene or naphthalene series, K is the radical of a coupling component of the benzene or naphthalene series or of the heterocyclic series, R is hydrogen, methyl or ethyl, n is 1 or 2, Y is as defined in claim 1, and the reactive radical is bonded to the diazo component $D_1$ or to the coupling component K, or one reactive radical each is bonded to $D_1$ and K.

10. A reactive dye according to claim 4, of the formula

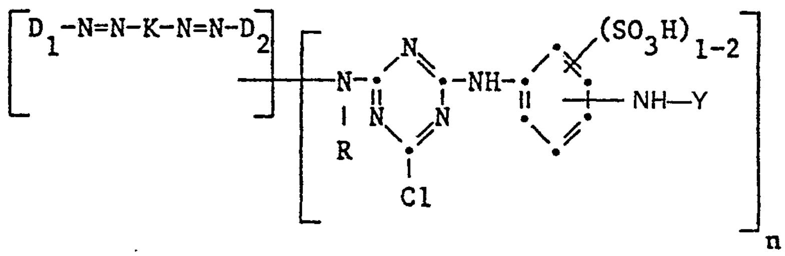

(4) ,

in which $D_1$ and $D_2$ are each a radical of a diazo component of the benzene or naphthalene series, K is the radical of a coupling component of the aminonaphtholsulfonic acid series, R is hydrogen, methyl or ethyl, n is 1 or 2, Y is as defined in claim 1, and the reactive radical is bonded to the diazo component $D_1$ or to the diazo component $D_2$, or one reactive radical each is bonded to $D_1$ and $D_2$.

11. A 1:1 copper complex of a reactive dye according to claims 8 to 10.

12. A process for preparing reactive dyes according to claim 1, which comprises condensing organic dyes of the formula

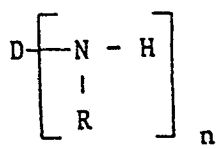

(5)

or dye precursors, at least one equivalent of a triazine of the formula

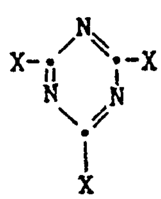

(6) ,

at least one equivalent of a compound of the formula

$$H—B—H \quad (7)$$

and at least one equivalent of an agent introducing the radical Y in any order to form a reactive dye of the formula (1), D, R, n, X and B in the formulae (5) to (7) and Y being as defined in claim 1, and in the case of the use of dye precursors, converting these into the desired final dyes.

13. Use of the reactive dye according to claim 1 for dyeing or printing.

14. Use according to claim 13 for dyeing and printing cellulose fibres.